(19) Europäisches Patentamt / European Patent Office / Office européen des brevets

(11) **EP 2 822 282 B1**

(12) **EUROPEAN PATENT SPECIFICATION**

(45) Date of publication and mention
of the grant of the patent:
**07.11.2018 Bulletin 2018/45**

(21) Application number: **13782156.7**

(22) Date of filing: **23.04.2013**

(51) Int Cl.:
*H04N 13/00* (2018.01)     *H04N 13/30* (2018.01)
*H04N 21/2362* (2011.01)     *H04N 21/43* (2011.01)
*H04N 21/434* (2011.01)     *H04N 21/81* (2011.01)

(86) International application number:
**PCT/KR2013/003468**

(87) International publication number:
**WO 2013/162256 (31.10.2013 Gazette 2013/44)**

(54) **SIGNAL PROCESSING DEVICE AND METHOD FOR 3D SERVICE**

SIGNALVERARBEITUNGSVORRICHTUNG UND VERFAHREN FÜR 3D-DIENST

DISPOSITIF ET PROCÉDÉ DE TRAITEMENT DE SIGNAUX POUR SERVICE 3D

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.04.2012 US 201261636741 P**

(43) Date of publication of application:
**07.01.2015 Bulletin 2015/02**

(73) Proprietor: **LG Electronics Inc.**
**Yeongdeungpo-gu**
**Seoul 150-721 (KR)**

(72) Inventors:
• **HONG, Hotaek**
**Seoul 137-724 (KR)**
• **CHOE, Jeehyun**
**Seoul 140-871 (KR)**
• **HWANG, Soojin**
**Seoul 137-724 (KR)**
• **SUH, Jongyeul**
**Seoul 137-724 (KR)**

(74) Representative: **Cabinet Plasseraud**
**66, rue de la Chaussée d'Antin**
**75440 Paris Cedex 09 (FR)**

(56) References cited:
WO-A1-2013/032221    JP-A- 2010 505 327
KR-A- 20100 086 440    KR-A- 20110 123 658
KR-A- 20120 036 783    KR-A- 20120 036 783
KR-A- 20120 037 208    US-A1- 2009 268 806

**Description**

TECHNICAL FIELD

The present invention relates to a method of processing a signal for a 3D (3-dimensional) service and an apparatus therefor, and more particularly, to a method of transceiving and processing the signal for the 3D service via various paths, channels, media and the like and an apparatus therefor.

BACKGROUND ART

As the dissemination of a 3DTV (3-dimensional television) is raging, dissemination of a 3D service is vitalized by not only a storing medium but also a broadcasting.

In general, a 3 dimensional video provides a 3D effect using a principle of stereo vision of two eyes. Since a human feels perspective via parallax of two eyes, in other word, binocular parallax due to a space between two eyes apart from each other about 65 mm, the 3D video may provide the 3D effect and the perspective in a manner of providing a video, which makes a left eye and a right eye see a related plane video, respectively.

The 3D video display method includes a stereoscopic technique, a volumetric technique, a holographic technique, and the like. In case of the stereoscopic technique, it provides a left view video supposed to be watched by a left eye and a right view video supposed to be watched by a right eye. The stereoscopic technique enables a viewer to recognize a 3D video effect in a manner of making the left eye and the right eye watch the left view video and the right view video, respectively using a polarized glasses or a display device itself.

In particular, in case of a stereoscopic 3D video content, if at least two similar videos of different time frame are transmitted, a receiver can display a 3D video using the two videos.

Conventionally, two similar videos of different time frame used to be transmitted on a legacy broadcasting channel, i.e., an identical channel. Unlike the related art, if the two videos are not transmitted on the identical channel, it is necessary to know when/how the two videos need to be synchronized to properly provide a user with a 3D service. For example, US 2009/268806 A1 discloses a broadcasting system that combines a real-time (RT) and non-real time (NRT) service in a scalable fashion based on the picture number of the video elementary stream.

DISCLOSURE OF THE INVENTION

TECHNICAL TASKS

The present invention is devised to solve the aforementioned problem. One of the technical tasks of the present invention is to define a 3D service (3-dimensional service) of a hybrid scheme and provide a method of processing a signal for the 3D service and an apparatus therefor.

Another technical task of the present invention is to define a time synchronization method of a standard video and an additional video for a 3D service of a hybrid scheme and provide a method of processing a signal for the 3D service and an apparatus therefor.

Another technical task of the present invention is to provide a method of providing or processing a 3D service of higher compression rate and high resolution compared to a legacy scheme as well as a method of increasing transmission efficiency of a signal via a hybrid scheme while compatibility with a legacy scheme is maintained and an apparatus therefor.

The other technical task of the present invention is to provide a method applicable to not only a stereoscopic 3D service but also a multi-view 3D service and an apparatus therefor.

TECHNICAL SOLUTION

To achieve these and other advantages and in accordance with the purpose of the present invention, as embodied and broadly described, according to one embodiment, a method of processing a 3D service according to claim 1 is provided.

To further achieve these and other advantages and in accordance with the purpose of the present invention, according to a different embodiment, a 3D service processing device according to claim 4 is provided.

ADVANTAGEOUS EFFECTS

According to the present invention, following effects can be obtained.

First of all, a 3DTV service of a hybrid scheme can be processed.

Second, a standard video and an additional video can be synchronized with each other for a 3DTV service of a hybrid scheme.

Third, signal transmission efficiency can be increased while compatibility with a legacy scheme is maintained. Moreover, a 3DTV service of a higher compression rate and a higher resolution compared to a legacy scheme can be provided or processed.

Fourth, the present invention can be applied to not only a stereoscopic 3DTV service but also a multiview 3DTV service.

DESCRIPTION OF DRAWINGS

FIG. 1 is a diagram for explaining one embodiment of configuring a server system 100;

FIG. 2 is a diagram for explaining one embodiment of configuring a receiver system 200 corresponding to the aforementioned server system 200 of FIG. 1;

FIG. 3 is a diagram for explaining one embodiment of bit stream syntax of a PMT table section for a non-real time hybrid 3D service;

FIG. 4 is a diagram for explaining one embodiment of a bit stream syntax structure of program_enhancement_descriptor();

FIG. 5 is a diagram for explaining one embodiment of bit stream syntax of a TVCT table section for a non-real time hybrid 3D service;

FIG. 6 is a diagram for explaining one embodiment of a bit stream syntax structure of channel_enhancement_descriptor();

FIG. 7 is a diagram for explaining one embodiment of bit stream syntax of an SDT table section for a non-real time hybrid 3D service;

FIG. 8 is a diagram for explaining one embodiment of a bit stream syntax structure of service_enhancement_descriptor();

FIG. 9 is a diagram for explaining one embodiment of bit stream syntax of an EIT table section for a non-real time hybrid 3D service;

FIG. 10 is a diagram for explaining a different embodiment of bit stream syntax of an EIT table section for a non-real time hybrid 3D service;

FIGS. 11 to 13 are diagrams for explaining one embodiment of event_enhancement_descriptor() for a non-real time hybrid 3D service;

FIG. 14 is a diagram for explaining a different embodiment of event_enhancement_descriptor() for a non-real time hybrid 3D service;

FIG. 15 is a flowchart for explaining one embodiment of an operation of a receiver in relation to an NRT service shown in FIG. 14;

FIG. 16 is a diagram for explaining one embodiment of a synchronization scenario in a non-real time hybrid 3D service;

FIG. 17 is a flowchart for explaining the synchronization scenario shown in FIG. 16;

FIG. 18 is a flowchart for explaining one embodiment of a method of processing a signal for a non-real time hybrid 3D service.

BEST MODE

Reference will now be made in detail to the preferred embodiments of the present invention, examples of which are illustrated in the accompanying drawings. Yet, the present invention may be non-limited or non-restricted by the embodiments.

Although terminologies used in the present specification are selected from general terminologies used currently and widely in consideration of functions, they may be changed in accordance with intentions of technicians engaged in the corresponding fields, customs, advents of new technologies and the like. Occasionally, some terminologies may be arbitrarily selected by the applicant(s). In this case, the meanings of the arbitrarily selected terminologies shall be described in the corresponding part of the detailed description of the specification. Therefore, terminologies used in the present specification need to be construed based on the substantial meanings of the corresponding terminologies and the overall matters disclosed in the present specification rather than construed as simple names of the terminologies.

In the present specification, a signal processing apparatus including a 3D service and a method of therefor are described in detail with reference to attached drawings in the following. Regarding this, the present specification defines a 3D service of a hybrid scheme, a method of processing a signal for the 3D service and an apparatus therefor, a time synchronization method of a reference video (base stream or base view) and an additional video (additional stream or additional view) for the 3D service of the hybrid scheme. And, the present specification describes a method of providing or processing a 3D service of higher compression rate and higher resolution compared to a legacy scheme as well as a method of increasing transmission efficiency via the hybrid scheme while backward compatibility is maintained and an apparatus therefor. Moreover, the present specification describes a method and apparatus applicable to not only a stereoscopic 3D service but also a multi-view 3D service.

In the following, "hybrid" described in the present specification is commonly called a scheme of transmitting a signal for a 3D service via channels, paths, or media different from each other. For instance, the hybrid scheme includes a case of transmitting an additional video on a different channel or a different medium to secure transmission volume of a legacy channel band. The hybrid 3D service scheme includes a real time hybrid scheme and a non-real time hybrid scheme. For instance, the real time hybrid scheme indicates a scheme of receiving videos via broadcasting and the internet (internet protocol) at the same time using a real-time streaming technology for the internet transmission. In the real-time hybrid scheme, a stream transmitted via the internet is mainly transmitted using an MPEG-2 transport stream (TS) identical to a stream mainly used for broadcasting. Hence, in this case, synchronization can be performed using an identical PTS/DTS (presentation time stamp/decoding time stamp). In this case, a broadcasting station performs a transport stream (TS) encoding on a standard/additional video of broadcasting and the internet on the basis of an identical clock to match the PTS/DTS with each other and can transmit the videos in a manner of dividing transmission media only. Yet, in this case, a bandwidth capable of transmitting and receiving real-time broadcasting in the internet should be secured. On the contrary, for instance, the non-real time hybrid scheme indicates a scheme that an additional video is downloaded to a receiver prior to real-time broadcasting and the additional video is shown with a standard video, which is broadcasted in accordance with real-time broadcasting timing, in a manner of being synchronized with the standard video in prescribed time. Unlike the real-time hybrid scheme transmitting an additional video in real-time such as live broadcasting, the non-real time hybrid scheme can download the additional video for sufficient time without any burden of a bandwidth. Hence, the non-real time hybrid scheme can be mainly used for such contents made by 3D in advance as a movie and the like. Hence, according to the non-real time hybrid scheme, if corresponding content is downloaded in advance and synchronization is matched well, a service more stable than a service of the real-time scheme can be provided without any buffering and the like. The non-real time hybrid scheme is widely used for a low-capacity storing purpose rather than a high-capacity transport stream (TS) form. For instance, a MP4 file format may be used for the non-real time hybrid scheme. Hence, the present specification provides a method of processing MPEG-2 TS and a MP4 file format without any problem for synchronizing the MPEG-2 TS and the MP4 file format where synchronization schemes are different from each other.

In the following, "time synchronization" described in the present specification is commonly called a synchronization scheme according to time information difference between a standard video and an additional video for a hybrid 3D service. If the time synchronization is not properly achieved, the hybrid 3D service cannot be appropriately provided to a user. Since the time synchronization mainly causes a problem in the aforementioned non-real time hybrid 3D service scheme, the present specification is described based on the non-real time hybrid 3D service scheme.

In particular, the present specification discloses one embodiment that a standard video is transmitted with a real time scheme and an additional video is transmitted with a non-real time scheme for the hybrid 3D service. And, the present specification discloses one embodiment that the additional video is transmitted on a channel identical/different to/from a channel of the standard video or a different medium, i.e., IP while the additional video is transmitted with the non-real time scheme.

The method of displaying a 3 dimensional video may include a stereoscopic technique considering two viewpoints and a multiple-view video technique (or a multi-view technique) considering more than 3 viewpoints. Comparably, a conventional single view video technique may be called a mono-scopic technique.

The stereoscopic technique uses a pair of video, i.e., a left view video (hereinafter, a left video) and a right view video (hereinafter, a right video) obtained by photographing a same subject with a left camera and a right camera, which are away a certain distance from each other. Or, the stereoscopic technique uses a pair of video, i.e., a standard video and an additional video. Yet, it is not necessary for the standard video and the additional video to be mapped to the left video and the right video, respectively. This can be identified by signaling information. In the following description, the left, right video and the standard, additional video can be used as an identical or similar meaning as an element included in a 3D video of the stereoscopic scheme. Meanwhile, the multi-view technique uses more than 3 videos obtained by photographing with 3 or more cameras having a certain distance and angle. For clarity, although the present invention mainly explains the stereoscopic technique as one embodiment in the following description, as mentioned in the foregoing description, it is apparent that the idea of the present invention can also be applied to the multi-view technique using an identical or similar scheme.

According to the present invention, the stereoscopic technique includes a side-by-side, a top-down, a checker board, a frame sequential technique, and the like. For instance, the side-by-side technique is a technique configuring one stereoscopic video by performing a half down sampling horizontally on each of a left video and a right video, respectively and situating one sampled video in a left region and the other sampled video in a right region. On the contrary, the top-down technique is a technique configuring one stereoscopic video by performing a half down sampling vertically on each of a left video and a right video, respectively and situating one sampled video in a top region and the other sampled video in a bottom region. And, the checker board technique is a technique configuring one video by performing a half down sampling in a manner that a left video and a right video respectively intersect horizontally and vertically. Yet, the stereoscopic technique according to the present invention may be non-limited by the aforementioned example. In case of using the stereoscopic scheme, it is necessary to have signaling information to couple a left video with a right video or a standard video with an additional video for a 3D service.

As mentioned in the foregoing description, as a stereoscopic scheme, a current 3D service mainly uses a side-by-side or a top-and-bottom scheme transmitting a screen in a manner of dividing the screen into two. Yet, although the current 3D service may use a legacy broadcasting system, i.e., a transmission system as it is, if a mode is switched to a 3D mode, resolution is reduced to a half and video quality is deteriorated. In order to compensate the aforementioned problem, a full HD (high-definition) quality 3D broadcasting standard has been established. This scheme is a scheme of transmitting a multi-view video together with a legacy video using a spare band or a multi-view CODEC while transmitting a 2D video with a full HD quality. Yet, since this scheme is used for transmitting all multi-view videos with full HD quality, transmission volume may be considerable.

In relation to this, the present specification mainly describes the non-real time hybrid 3D service scheme in the following. Detail explanation on the real time hybrid scheme is omitted in the following description.

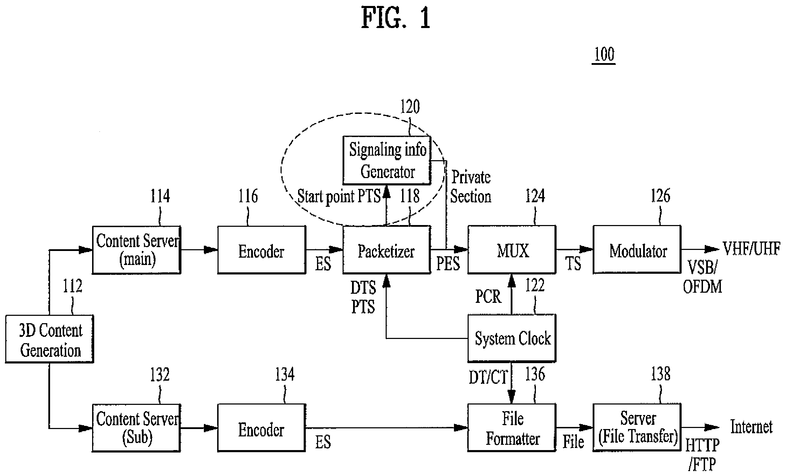

FIG. 1 is a diagram for explaining one embodiment of configuring a server system 100.

As shown in the drawing, configuration of a server system 100 in FIG. 1 is mainly classified into a main part and a sub part. In this case, the main part may correspond to a configuration for processing a standard video and the sub part may correspond to a configuration for processing an additional video. Of course, configuration for each video can be configured in opposite way. And, the main part is a configuration for transmitting a standard video in a transport stream form on a broadcasting channel (VHF/UHF) and the sub part is a configuration for transmitting an additional video in an MPEG-4 ISO file form via an IP (internet protocol).

Components of a transmitting end, i.e., a server system 100 are explained in more detail with reference to FIG. 1 in the following.

In the meantime, the server system 100 may be mainly divided into a content generation part, a stream generation part/modulation part and a hybrid server part.

In this case, the content generation part can include a 3D content generation part 112, a content server 114/132 and an encoder 116/134.

The 3D content generation part 112 generates a synchronized standard and additional video and transmits each of the generated videos to the content server 114 of the main part and the content server 132 of the sub part, respectively.

The content server 114/132 delivers the corresponding video transmitted from the 3D content generation part 112 to the encoder 116/134 via a dedicated interface.

The encoder 116/134 compresses the video transmitted via the content server 114/132, i.e., the video not compressed, in real time using CODEC and generates an ES (elementary stream). In this case, the CODEC may include MPEG-2 video (MP2V), AVC, HEVC, MVC and the like. Meanwhile, the video may be compressed by an identical or different CODEC in each encoder according to a part. For instance, the MPEG-2 video can be used as CODEC in the encoder 116 of the main part and AVC can be used as CODEC in the encoder 134 of the sub part.

It is necessary to generate a form or a format to transmit the standard video and the additional video, which are finally generated by the content generation part, based on the ES (elementary stream) and modulate the form or the format.

A stream generator/modulator can include a packetizer 118, a signaling information generator 120, a system clock part 122, a multiplexer 124 and a modulator 126.

In the meantime, the stream generator/modulator is used for generating and modulating all streams for the ES (elementary stream) for the standard video generated by the encoder 116 of the main part. Meanwhile, processing on the ES (elementary stream) for the additional video generated by the encoder 134 of the aforementioned sub part is processed by a hybrid server part corresponding to the stream generator/modulator.

Hence, the stream generation part/modulator for the main part is described here and the processing on the sub part shall be described later.

The packetizer 118 generates PES (packetized ES) in a manner of dividing the elementary stream generated by the encoder 116 into a prescribed size. In this case, for instance, the generated PES may include DTS/PTS (decoding time stamp/presentation stamp) information (33 bits) according to a system clock of a system clock part 122. In this case, relevant information can be generated in a manner of transmitting a PTS value (starting point PTS) on which synchronization with the additional video should be started to the signaling information generator 120.

The signaling information generator 120 generates signaling information relevant to an MPEG-2 transport stream (TS). In this case, the signaling information generator may also deliver PTS information relevant to a start point of non-real time broadcasting.

The multiplexer 124 multiplexes such a private section as audio and video data PES generated by the packetizer 118, signaling information and the like and generates a transport stream (TS).

The modulator 126 modulates the transport stream (TS) generated by the multiplexer 124 with a prescribed modulation scheme and transmit it via a transmitting end. In this case, for instance, the prescribed modulation scheme includes all modulation schemes including VSB (vestigial side band), OFDM (orthogonal frequency division multiplexing) and the like.

The system clock part 122 generates a system reference clock. For instance, the system clock part inserts time information including PCR, DTS, PTS and the like into PES and a transport stream (TS).

In the following, a hybrid server side is explained. Processes until the elementary stream (ES) for the additional video is generated via the encoder 134 are identical to what is above-mentioned.

The hybrid server includes a file formatter 136 and a file transfer 138. In this case, as mentioned in the foregoing description, the file formatter 136 processes an ISO file and the file transfer 138 is explained with an example of a web server.

The file formatter 136 divides an elementary stream into a prescribed size, configures a random access point (RAP) (sample) in every prescribed unit and formats in an ISO file format form. For instance, the file formatter 136 stores such an elementary stream as a video, an audio and the like together and stores information on the stream in a moov box. In this case, for instance, the moov box corresponds to a signaling position. Meanwhile, the information on the stream may be stored in a different box as well as the moov box. And, for instance, the file formatter 136 can store such time information for synchronization and random access as DT (decoding time), CT (composition time) and the like together with such reference time as time scale information and the like received from the system clock part 122.

The file transfer 138 transmits a pre-stored additional video file via a file transfer protocol in accordance with a request of a receiver. In this case, for instance, the file transfer protocol includes various protocols including HTTP (Hyper Text Transfer Protocol), FTP (File Transfer Protocol), HTTPS (Hypertext Transfer Protocol over Secure Socket Layer) and the like.

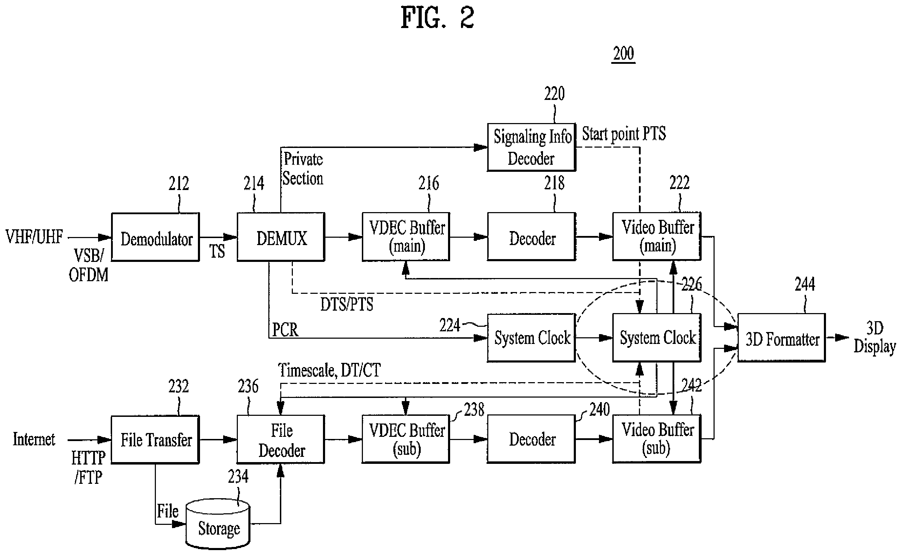

FIG. 2 is a diagram for explaining one embodiment of configuring a receiver system 200 corresponding to the aforementioned server system 200 of FIG. 1.

According to one embodiment of the present specification, a 3D service processing device includes a receiver configured to receive a signal including content for a 3D service and signaling information, a singling information decoder configured to extract and decode an event information table from the received signaling information and if an event from a descriptor in the decoded event information table corresponds to an event for the 3D service, a controller configured to identify whether the event services a non-real tie 3D service, the controller configured to identify whether an enhancement file of the identified non-real time 3D service is downloaded, the controller configured to calculate CT for synchronization and the controller configured to control 3D content to be played in a manner of finding out a position of a sample based on the calculated CT and performing a synchronization process based on the calculated CT.

In this case, the signaling information decoder extracts a program map table from the signaling information and decodes the program map table. The controller extracts PID of a video stream for a standard video from the decoded program map table and can control a current PTS to be obtained from the video stream for the standard video.

And, the controller controls a start PTS to be obtained from the descriptor in the event information table, controls the enhancement file acquisition information to be extracted from the descriptor in the event information table and controls time scale information on an enhancement file to be extracted based on the extracted enhancement file acquisition information.

And, the descriptor in the event information table, which is decoded by the signaling information decoder, may correspond to event_enhancement_descriptor.

And, the controller can identify whether the event corresponds to an event for a 3D service according to whether there exists the event_enhancement_descriptor.

In this case, the enhancement file may correspond to one of MPEG-2 transport stream (TS) and an ISO-based file format.

And, the controller can calculate the CT based on the obtained current PTS, the start PTS and the extracted time scale information. The controller finds out a sync sample based on the calculated CT, finds out a sample chunk based on the found sync sample and can control a position of an elementary stream for an additional video to be obtained from the found sample chunk.

As shown in FIG. 2, the receiver system 200 is configured to be corresponded to the server system 100 shown in FIG. 1. Hence, the receiver system 200 is mainly classified into a main part processing part and a sub part processing part. In this case, for instance, the main part processing part corresponds to a DTV reception part. The main part processing part can be configured to process a standard video. For instance, the sub part processing part corresponds to a hybrid reception part. The sub part processing part can be configured to process an additional video. Of course, as mentioned in the foregoing description, configuration for each part can be configured in opposite way. And, the main part processing part can be configured to receive and process a transport stream (TS) on a broadcasting channel (VHF/UHF) and the sub part processing part can be configured to receive and process files transmitted according to such a transfer protocol as HTTP, FTP and the like via IP. Besides, the receiver system 200 may further include a synchronization and rendering part to control operations of the main part processing part and the sub part processing part and may be then able to control overall output process.

In the following, components of a receiving end, i.e., the receiver system 200, are explained in more detail with reference to FIG. 2.

First of all, a DTV reception part as a main part processing part is explained with reference to an attached drawing in the following.

The DTV reception part includes a tuner (not depicted), a demodulator 212, a demultiplexer 214, a video decoder buffer (VDEC buffer) 216, a decoder 218, a signaling information decoder 220, a video processing unit (main) and the like. In this case, the video processing unit (main) is configured by the video decoder buffer 216, the decoder 218 and the video (frame) buffer 222 in sequential.

The demodulator 212 receives a transport stream (TS) in a manner of demodulating a signal received via the tuner with a demodulation scheme corresponding to a modulation scheme.

The demultiplexer 214 demultiplexes the received transport stream (TS) into an audio elementary stream, a video elementary stream, a data elementary stream and signaling information of a private section form via packet identifier (PID) filtering.

In the aforementioned description, the demultiplexer 214 can also extract PCR, which is used for correcting a system clock of the receiver, from the transport stream (TS). The extracted PCR is delivered to the synchronization part 226 via the system clock part 224. In relation to this, the demultiplexer 214 extracts DTS and PTS and delivers the DTS and the PTS to the synchronization part 226. In this case, the DTS is used for controlling decoding time in the video decoder buffer 216 according to a control of the synchronization part 226 and the PTS is used for designating or controlling output time in the video buffer 222 according to a control of the synchronization part 226.

The signaling information decoder 220 receives private sections for the signaling information demultiplexed by the demultiplexer 214 and decodes information on a stream and a service.

The signaling information decoder 220 delivers the decoded signaling information to the synchronization part 226. In this case, a start point PTS can also be delivered to the synchronization part 226.

The video processing part (main) decodes the video elementary stream (ES) demultiplexed by the demultiplexer 214 into a video image using CODEC.

Subsequently, a hybrid reception part is explained with reference to an attached drawing in the following.

In the meantime, the hybrid reception part includes a file transfer 232, storage 234, a file decoder 236 and a video processing part. In this case, the video processing part can be configured with a video decoder buffer 238, a decoder 240 and a video (frame) buffer 242 in sequential similar to the aforementioned DTV reception part.

The file transfer 232 receives a video file for an additional video using a prescribed protocol via an IP. In this case, the prescribed protocol includes FTP, HTTP and the like for example. The prescribed protocol may correspond to a transfer protocol of a transmitting end. Meanwhile, the video file may be configured by an ISO file format form.

The storage 234 stores a file received via the file transfer 232.

The file decoder 236 extracts a file stored on a specific time from the storage 234. In this case, the file decoder 236 extracts such timing information as DT, CT and the like used for synchronization and random access together with time scale from the storage and delivers it to the synchronization part 226 together with the extracted file. Meanwhile, the extracted timing information and the time scale may be relevant to the extracted file.

The video processing part decodes the extracted file into a video image for an additional video using CODEC.

In the aforementioned description, operations of the file decoder 236 and the video processing part and the like are controlled by the synchronization part 226. Regarding this, it shall be described in detail when the synchronization part 226 is explained.

Lastly, a synchronization part and a rendering part are described in detail with reference to an attached drawing in the following.

As mentioned in the foregoing description, the system clock part 224 receives PCR information extracted by the demultiplexer 214 and delivers the PCR information to the synchronization part 226. The PCR information is used for providing reference time information of a receiver. Time of the receiver can be corrected by the PCR. Meanwhile, in case of delivering various time information, time scale and the like to a different component or controlling the various time information, the time scale and the like, the synchronization part 226 may perform the delivery or the control based on the PCR information delivered from the system clock part 224.

The synchronization part 226 receives the DTS/PTS extracted by the demultiplexer 214, the start point PTS delivered from the signaling information decoder 220 and the DT/CT and the time scale information extracted from the file decoder 236. The synchronization part 226 delivers each of the received time information to the corresponding video processing part, the file decoder and the like on a prescribed time to involve and control decoding of a standard video and an additional video. In other word, the synchronization part 226 adjusts or controls a synchronization timing of a video stream for the standard video and the additional video based on the time information.

The 3D formatter 244 formats the standard video and the additional video outputted via each of the video (frame) buffer part 222/242 into a 3D video according to an output frequency of a display part (not depicted) and renders a video image for a 3D service. The rendered 3D video is outputted via the display part.

In the aforementioned contents, configuration of the transmitting end and the receiving end for the non-real time hybrid 3D service and processes therefor are described. In particular, as mentioned in the foregoing description, since a form of a file, which is transmitted via channels or media different from each other and configures a video image, may be different from each other in the non-real time hybrid 3D service processing process, a synchronization process is very important. Even in a 2D service, if synchronization between a video data and an audio data is not matched a little bit with each other, it may affect a viewer considerable burden and inconvenience. Hence, in case of a 3D service, stream synchronization for a plurality of video streams, i.e., the standard video and the additional video may be more important point.

Hence, among the aforementioned configuration of the transmitting end and the receiving end and the processes, the synchronization process is explained in more detail with reference to an attached drawing in the following description. Meanwhile, the synchronization process may use signaling information for example. The synchronization process is explained based on the signaling information.

In the present specification, when a reference time is configured, in case of a real time standard video, MPEG-2 transport stream (TS) based on PTS can be used to set the reference time. Or, a streaming scheme equipped with a synchronization/clock-based structure corresponding to the MPEG-2 transport stream (TS) can be used. Meanwhile, in case of a non-real time hybrid 3D service, it is necessary to match the real time standard video with a 3D content start point of a pre-downloaded additional video. For instance, start time is signaled using such signaling information as PSI, PSIP, DVB-SI and the like and a receiver may start playback of the additional video on the time. In this case, it is preferable to use the PSI, the PSIP and the DVB-SI for the accuracy of the start time. And, in case of a non-real time additional video, an ISO-based file format or a storing scheme equipped with a synchronization/clock-based structure corresponding to the ISO-based file format can be used.

The aforementioned signaling information can be configured as follows. Signaling can be added to event information of an EIT (event information table) included in the PSIP or the DVB-SI in a descriptor form. In this case, start time can be configured on the basis of start time of a pre-downloaded additional video and signals PTS of a real time stream corresponding to the start point of the additional video. Meanwhile, in case of accessing a service in the middle of an event, a playback timing of the additional video on specific time is calculated based on time information and sample information of an additional video file and correlation between a start point of a descriptor in a standard video stream and the PTS. And, in order to cope with a case that a hybrid 3D video is watched on random timing except the start time, it is able to additionally signal a playback time of the additional video and a real time PTS value corresponding to the playback time of the additional video.

Meanwhile, a download support of a file scheme is explained in the following. If a standard video and an additional video are synchronized with each other using PTS only, a storing scheme may be limited to MPEG-2 transport stream (TS). Yet, since the transport stream (TS) has a large file size and does not correspond to a format for storing purpose, difficulty may arise in downloading and managing a storing media. On the contrary, since an ISO-based file format is used by various media devices, it is convenient to manage a file and it is easy to implement a product relevant to a playback of a file. As a representative example, an MPEG-4 file format is widely used.

Besides, clock support based on various time scales is explained in the following. A time scale is separately designated in the ISO-based file format while a synchronization clock of the MPEG-2 transport stream is limited to 90 MHz. Hence, if a scheme of synchronizing with the separately designated time scale is proposed, when synchronization is performed with a medium of a different form except ISO, it may be able to synchronize with real time broadcasting using the identical scheme.

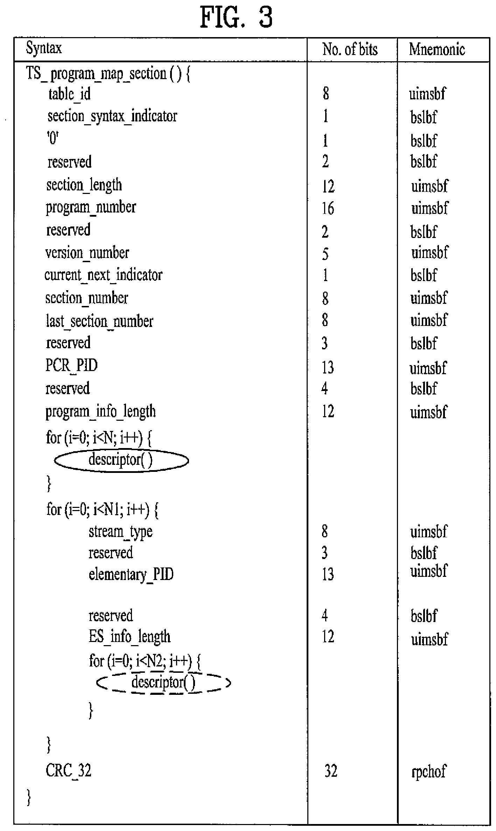

First of all, FIG. 3 is a diagram for explaining one embodiment of bit stream syntax of a PMT table section for a non-real time hybrid 3D service.

A PMT (program map table) is a table providing mappings between program numbers and program elements. Enhancement data, which is interlocked with a corresponding program or a program element, is signaled in a program level or an ES (elementary stream) level of the PMT using a descriptor.

In the following, each data included in PMT table section is described with reference to an attached drawing.

A table_id field is 8-bit field and TS_program_map_section is set to a value of '0×02'.

A section_syntax_indicator field is 1-bit field and is set to '1'.

A section_length field consists of 12 bits and first two bits correspond to '00'. This field indicates the number of bytes of a section and indicates a length from the right after this field to a CRC. A value of this field does not exceed 1021.

A program_number field consists of 16 bits. This field indicates a program to which a program_map_PID is applicable. One program definition is transmitted by one TS_program_map_section only. This implies that a program definition cannot exceed 1016.

A version_number field indicates a version number of PMT section. A version number increases by '1' on every change in a corresponding table section.

A current_next_indicator field is 1-bit field. This field identifies whether a transmitted PMT section is currently applicable. If the transmitted PMT section is currently applicable, a value of this filed is set to '1'. If the value is set to '0', it means that the transmitted PMT section is not applicable yet and the next table section is valid.

A section_number field is 8-bit field and is set to '0×00'.

A last_section_number field is 8-bit field and is set to '0×00'.

A PCR_PID field is 13-bit field. This field indicates a PID (packet identifier) of transport stream (TS) packets including PCR fields, which are valid for a program described by a program number.

A program_info_length field is 12-bit field and first two bits correspond to '00'. The remaining 10 bits explain the number of bytes of descriptors that follow immediately after this field.

A stream_type field is 8-bit field and indicates a type of program element transmitted in a manner of being included in packets having a PID value of elementary_PID. In this case, a value of the stream_type field can be defined or allocated as shown in Table 1 in the following.

[Table 1]

| Value | Description |
|-------|-------------|
| 0x00 | ITU-T \| ISO/IEC Reserved |
| 0x01 | ISO/IEC 11172-2 Video |
| 0x02 | Rec. ITU-T H.262 \| ISO/IEC 13818-2 Video or ISO/IEC 11172-2 constrained parameter video stream (see note 2) |
| 0x03 | ISO/IEC 11172-3 Audio |
| 0x04 | ISO/IEC 13818-3 Audio |
| 0x05 | Rec. ITU-T H.222.0 \| ISO/IEC 13818-1 private_sections |
| 0x06 | Rec. ITU-T H.222.0 \| ISO/IEC 13818-1 PES packets containing private data |
| 0x07 | ISO/IEC 13522 MHEG |
| 0x08 | Rec. ITU-T H.222.0 \| ISO/IEC 13818-1 Annex A DSM-CC |
| 0x09 | Rec. ITU-T H.222.1 |
| 0x0A | ISO/IEC 13818-6 type A |
| 0x0B | ISO/IEC 13818-6 type B |
| 0x0C | ISO/IEC 13818-6 type C |
| 0x0D | ISO/IEC 13818-6 type D |
| 0x0E | Rec. ITU-T H.222.0 \| ISO/IEC 13818-1 auxiliary |
| 0x0F | ISO/IEC 13818-7 Audio with ADTS transport syntax |
| 0x10 | ISO/IEC 14496-2 Visual |
| 0x11 | ISO/IEC 14496-3 Audio with the LATM transport syntax as defined in ISO/IEC 14496-3 |
| 0x12 | ISO/IEC 14496-1 SL-packetized stream or FlexMux stream carried in PES packets |
| 0x13 | ISO/IEC 14496-1 SL-packetized stream or FlexMux stream carried in ISO/IEC 14496_sections |
| 0x14 | ISO/IEC 13818-6 Synchronized Download Protocol |
| 0x15 | Metadata carried in PES packets |
| 0x16 | Metadata carried in metadata_sections |

(continued)

| Value | Description |
|---|---|
| 0x17 | Metadata carried in ISO/IEC 13818-6 Data Carousel |
| 0x18 | Metadata carried in TSO/TEC 13818-6 Object Carousel |
| 0x19 | Metadata carried in ISO/IEC 13818-6 Synchronized Download Protocol |
| 0x1A | IPMP stream (defined in ISO/IEC 13818-11, MPEG-2 IPMP) |
| 0x1B | AVC video stream conforming to one or more profiles defined in Annex A of Rec. ITU-T H.264 | ISO/IEC 14496-10 or AVC video sub-bitstream of SVC as defined in 2.1.78 or MVC base view sub-bitstream, as defined in 2.1.85, or AVC video sub-bitstream of MVC, as defined in 2.1.88 |
| 0x1C | ISO/IEC 14496-3 Audio, without using any additional transport syntax, such as DST, ALS and SLS |
| 0x1D | ISO/IEC 14496-17 Text |
| 0x1E | Auxiliary video stream as defined in ISO/IEC 23002-3 |
| 0x1F | SVC video sub-bitstream of an AVC video stream conforming to one or more profiles defined in Annex G of Rec. ITU-T H. 264 | ISO/IEC 14496-10 |
| 0x20 | MVC video sub-bitstream of an AVC video stream conforming to one or more profiles defined in Annex H of Rec. ITU-T H.264 | ISO/IEC 14496-10 |
| 0x21 | Video stream conforming to one or more profiles as defined in Rec. ITU-T T.800 | ISO/IEC 15444-1 |
| 0x22 | Additional view Rec. ITU-T H.262 | ISO/IEC 13818-2 video stream for service-compatible stereoscopic 3D services (see note 3 and 4) |
| 0x23 | Additional view Rec. ITU-T H.264 | ISO/IEC 14496-10 video stream conforming to one or more profiles defined in Annex A for service-compatible stereoscopic 3D services (see note 3 and 4) |
| 0x24-0x7E | Rec. ITU-T H.222.0 | ISO/IEC 13818-1 Reserved |
| 0x7F | IPMP stream |
| 0x80-0xFF | User Private |

Note 1: In the above table various stream types are assigned for carriage of audio signals, with or without a transport syntax. Typically, the transport syntax is used for providing sync words. The use of a specific transport syntax, if at all, is specified in the clauses in this Specification specifying the transport of the various audio signals. Note 2: Rec. ITU-T H.262 | ISO/IEC 13818-2 video with frame packing arrangement information is signalled using stream_type value 0x02. Note 3: The base view of service-compatible stereoscopic 3D services is signalled using stream_type value 0x02 for Rec. ITU-T H.262 | ISO/IEC 13818-2 video or stream_type 0x1B for Rec. ITU-T H.264 | ISO/IEC 14496-10 video.

An elementary_PID field is 13-bit field and indicates a PID (packet identifier) of a transport stream (TS) including a related program element.

An ES_info_length field is 12-bit field and first two bits correspond to '00'. The remaining 10 bits indicate the number of bytes of descriptors of a related program element, which follows this field.

A CRC_32 field is 32-bit field and indicates a CRC value making registers in a decoder to be zero output.

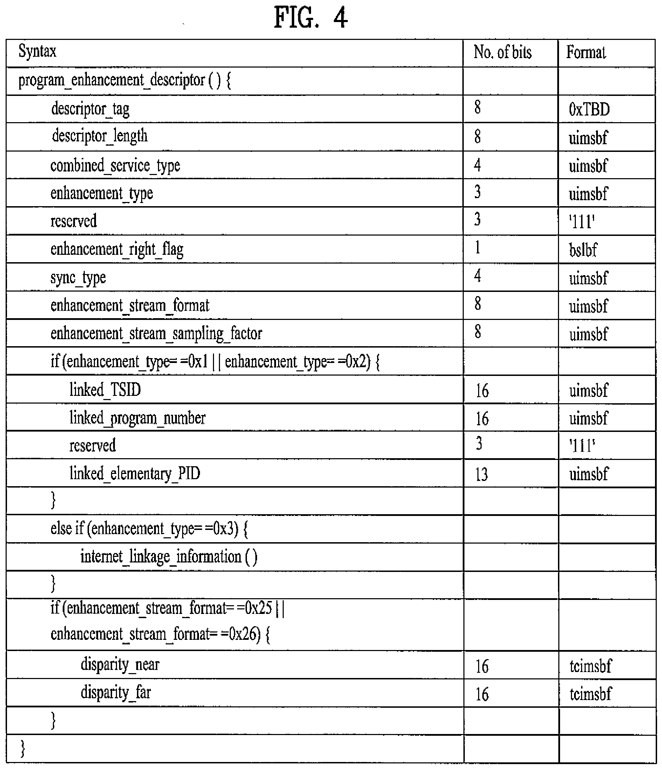

FIG. 4 is a diagram for explaining one embodiment of a bit stream syntax structure of program_enhancement_descriptor().

In the following, data of program_enhancement_descriptor() is described with reference to an attached drawing.

In the present specification, the program_enhancement_descriptor() provides information on an enhancement data configured to provide a 3D service in a manner of being interlocked with a corresponding program. For instance, the information indicates whether a program is interlocked.

For instance, the program_enhancement_descriptor() shown in FIG. 4 can be defined and included in one descriptor in a program level or an ES level in PMT section of FIG. 3.

Referring to FIG. 4, the program_enhancement_descriptor() includes a combined_service_type, an enhancement_type, an enhancement_right_flag, a sync_type, an enhancement_stream_format, an enhancement_stream_sampling_factor, a linked_TSID, a linked_program_number, a linked_elementary_PID, an internet_linkage_information, a disparity_near, a disparity_far, and the like. Meanwhile, each of the fields or data may be valid or invalid according to a prescribed condition.

The combined_service_type indicates a service type eventually provided when components, which are transmitted via two or more separate paths, channels, media and the like, are combined with each other. For instance, this field indicates a final service type provided in a manner of combining a corresponding program or a program element with an enhancement data received via a position designated by the present descriptor.

In this case, if the combined_service_type corresponds to '0×0', '0×1', '0×2' and '0×3', it indicates a 2D scalable video service, a 3D stereoscopic video service, a 3D multi-view service and Ultra definition (UD) video service, respectively. In addition, a value of the present field can be defined by values identifying a real time or a non-real time hybrid 3D service.

The enhancement_type identifies a type of a channel, a path or a medium on which an enhancement data for a corresponding program is transmitted. A meaning of a value of this field is identical to the content defined in the aforementioned event_enhancement_descriptor(). Yet, there exists a difference in that the value is applied in a program unit instead of a service unit.

The enhancement_right_flag identifies a left video or a right video of a video when timing of a 3D service is rendered using enhancement data. For instance, if a value of the present field corresponds to '1', it indicates that the enhancement data or a view of a video obtained by the enhancement data corresponds to the right video.

The sync_type indicates information on synchronization and a combining method for a component of a corresponding program and transmission of an enhancement data.

The enhancement_stream_format indicates information on a data format, CODEC and the like of an enhancement data for a corresponding event.

The enhancement_stream_sampling_factor indicates resolution of an enhancement data. This field indicates a horizontal and vertical sampling factor for a video stream (standard video) of a corresponding event. If a value of this field corresponds to '0×00', it indicates a resolution identical to a resolution of the standard video. If a value of this field corresponds to '0×XY', it indicates a resolution of a horizontal direction corresponds to 1 / (X + 1) and a resolution of a vertical direction corresponds to 1 / (Y + 1) in comparison with the resolution of the standard video. For instance, in case of depth information (depth/disparity map) having a 1/4 horizontal size and a 1/8 vertical size, this field has a value of 0×37.

If a value of the enhancement_type field corresponds to '0×01' or '0×02', a value of the linked_TSID, a value of the linked_program_number, a value of the linked_elementary_PID and the like are defined.

In this case, the linked_TSID indicates a transport_stream_id value for a program/channel including a stream to be combined with the present program/channel to provide a complete 3D video service.

The linked_program_number indicates a program_number value for a program/channel including a stream to be combined with the present program/channel to provide a complete 3D video service.

The linked_elementary_PID indicates an elementary_PID value of a stream to be combined with the present virtual channel to provide a complete 3D video service.

Meanwhile, if a value of the enhancement_type field corresponds to '0×03', internet_linkage_information() and the like are defined.

In this case, in case of transmitting an enhancement data via the internet, the internet_linkage_information() provides information on the enhancement data. The internet_linkage_information() can include a field indicating whether an IP address corresponds to 32 bits or 128 bits, an IP address, a port number, additional information of a corresponding stream such as URI and the like, and an available time slot. In this case, the available time slot may include start time and expiration time. The available time slot may be overlapped with an avail_time_start field.

And, if a value of the enhancement_stream_format corresponds to '0×25' or '0×26', a disparity_near, a disparity_far and the like are defined in relation to depth/disparity data.

Meanwhile, if an enhancement data corresponds to depth (disparity/depth map) information, the disparity_near and the disparity_far indicate a range of the depth. The disparity_near and the disparity_far indicate disparity values corresponding to an object point nearest from a user and an object point farthest from the user, respectively.

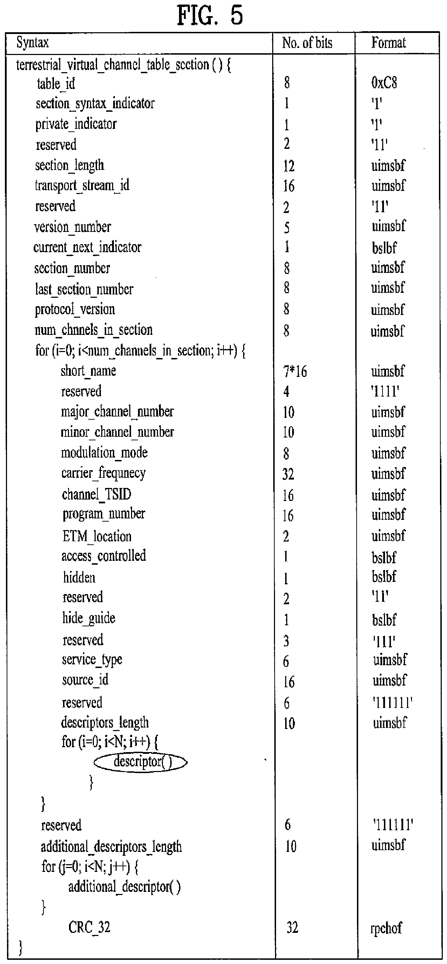

FIG. 5 is a diagram for explaining one embodiment of bit stream syntax of a TVCT (terrestrial virtual channel table) table section for a non-real time hybrid 3D service.

The TVCT is a table including a list of properties of virtual channels included in a transport stream (TS).

In the following, data included in a TCVT section are described with reference to an attached drawing.

A table_id field is an 8-bit field and indicates a type of a corresponding table section. For instance, a value of the present field has '0×C8' to indicate a TVCT table section.

A section_syntax_indicator is 1-bit field. A value of this field is set to '1'.

A private_indicator is 1-bit field. A value of this field is set to '1'.

A section_length field consists of 12 bits and first two bits correspond to '00'. This field indicates the number of bytes of a section and indicates a length from the right after this field to a CRC. A value of this field does not exceed 1021.

A transport_stream_id field is 16-bit field. This field corresponds to a MPEG-2 transport stream (TS) identifier (ID). Distinction from a different TVCT is enabled by the present field.

A version_number field is 5-bit field. This field indicates a version number of the present table. A version value increases by '1' on every change in a VCT. If the version value reaches '31', the next version value becomes '0'.

A current_next_indicator field is 1-bit field. This field identifies whether a VCT is currently applicable. In case that the VCT is currently applicable, a value of the present field is set to '1'. If the value is set to '0', it means that the VCT is not applicable yet and the next table is valid.

A section_number field is 8-bit field. This field indicates number of the present section. For instance, a value of the first section of the TVCT is '0×00' and the value increases by '1' on every additional section.

A last_section_number field is 8-bit field and indicates number of the last section of the present table. Hence, a section having a highest section_number out of the total TVCT sections becomes the last section.

A protocol_version field is 8-bit field and plays a role of permitting a table of a different type different from a table defined by a current protocol in the future. '0' is a value only valid in the current protocol. Values except '0' shall be used in a later version for a structurally different table.

A num_channels_in_section field is 8-bit field and indicates the number of virtual channels in a VCT section.

A short_name field indicates a name of a virtual channel.

A major_channel_number field is 10-bit field and indicates a major channel number of a virtual channel defined in a corresponding order in for loop. Each of the virtual channels consists of a major channel number and a minor channel number. The major channel number plays a role of a reference number of a corresponding virtual channel for a user together with the minor channel number. For instance, the major channel number has values ranging from 1 to 99 and a pair of major/minor channel numbers does not have a duplicated value in the TVCT.

A minor_channel_number field is 10-bit field and has values ranging from 0 to 999. The minor channel number operates as a two-part channel number together with the major channel number. For instance, in case that a service type is either ATSC_digital_television or ATSC_audio_only, the minor channel number has values ranging from 1 to 99. A pair of major/minor channel numbers does not have a duplicated value in the TVCT.

A modulation_mode field is 8-bit field and indicates a modulation mode of a transport carrier, which is related to a corresponding virtual channel.

A carrier_frequency field has a value of 0. Although checking a carrier frequency is permitted using the present field, it is denied.

A channel_TSID field is 16-bit field. This field has values ranging from '0×0000' to '0×FFFF' and it is an MPEG-2 TSID, which is related to a transport stream (TS) delivering an MPEG-2 program referenced by this virtual channel.

A program_number field is 16-bit field and attaches a virtual channel defined in the TVCT to an MPEG-2 PAT (program association table) and TS PMT.

An ETM_location field is 2-bit field and indicates existence and a location of an extended text message (ETM).

An access_controlled field is 1-bit Boolean flag. If the flag corresponds to '1', it may indicate that an access of an event related to a corresponding virtual channel is restricted. If the flag corresponds to '0', it indicates that the access is not restricted.

A hidden field is 1-bit Boolean flag. If the flag corresponds to '1', although a corresponding number is directly inputted by a user, an access is not permitted. Hidden virtual channels are skipped in case that a user surfs channels and can be seen as they are not defined.

A hide_guide field is a Boolean flag. If this field is set to '0' for a hidden channel, a virtual channel and an event of the hidden channel can be seen in EPG display. If a hidden bit is not set, this field is ignored. Hence, a non-hidden channel and its event belong to the EPG display irrespective of a state of a hide_guide bit.

A service_type field is 6-bit field and checks a service type delivered by a corresponding virtual channel.

A source_id field is 16-bit field and identifies a programming source related to a virtual channel. In this case, a source may correspond to one selected from the group consisting of a video, a text, data, and an audio programming. The source_id '0' is a reserved value. A value of this field has a sole value in the TS delivering the VCT in a range ranging from '0×0001' to '0×0FFF'. And, a value of this field has a sole value in a region level in a range ranging from '0×1000' to '0×FFFF'.

A descriptor_length field expresses a length of a descriptor following a corresponding virtual channel in a byte unit.

No descriptor or one or more descriptors can be included in a descriptor ().

An additional_descriptors_length field expresses a total length of following VCT descriptor list in a byte unit.

A CRC_32 field indicates a CRC value making a register in a decoder to be zero output.

Information on enhancement data, which is configured to provide a 3D video service in a manner of being interlocked with a component of a corresponding virtual channel, is signaled using a descriptor in a virtual channel level of the TVCT. The information indicates whether a channel is interlocked.

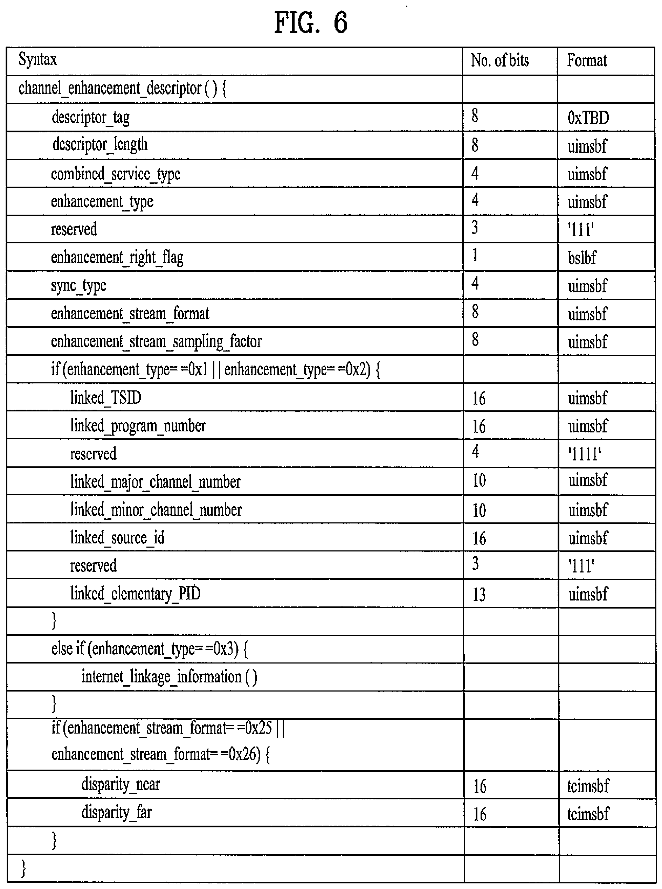

FIG. 6 is a diagram for explaining one embodiment of a bit stream syntax structure of channel_enhancement_descriptor().

In the following, data of channel_enhancement_descriptor() is described with reference to an attached drawing.

In the present specification, the channel_enhancement_descriptor() provides information on an enhancement data configured to provide a 3D service in a manner of being interlocked with a corresponding virtual channel. For instance, the information indicates whether a virtual channel is interlocked.

For instance, the channel_enhancement_descriptor() shown in FIG. 6 can be defined and included in one descriptor in a service level in TVCT section of FIG. 5.

Referring to FIG. 6, the channel_enhancement_descriptor() includes a combined_service_type, an enhancement_type, an enhancement_right_flag, a sync_type, an enhancement_stream_format, an enhancement_stream_sampling_factor, a linked_TSID, a linked_program_number, a linked_service_ID, a linked_elementary_PID, an internet_linkage_information, a disparity_near, a disparity_far, and the like. Meanwhile, each of the fields or data may be valid or invalid according to a prescribed condition.

The combined_service_type indicates a service type eventually provided when components, which are transmitted via two or more separate paths, channels, media and the like, are combined with each other. This field includes information identical to the information aforementioned in FIG. 4.

The enhancement_type identifies a type of a channel, a path or a medium on which an enhancement data for a corresponding virtual channel is transmitted. For instance, the type may include a terrestrial channel, the internet and the like. A meaning of a value of this field is identical to the content defined in FIG. 4. Yet, there exists a difference in that the value is applied in a virtual channel unit instead of an event or a program unit.

The enhancement_right_flag identifies a left video or a right video of an video when timing of a 3D service is rendered using enhancement data. For instance, if a value of the present field corresponds to '1', it indicates that the enhancement data or a view of an video obtained by the enhancement data corresponds to the right video.

The sync_type indicates information on synchronization and a combining method for a component of a corresponding virtual channel and transmission of an enhancement data.

The enhancement_stream_format indicates information on a data format, CODEC and the like of an enhancement data for a corresponding virtual channel.

The enhancement_stream_sampling_factor indicates resolution of an enhancement data. This field indicates a horizontal and vertical sampling factor for a video stream (standard video) of a corresponding virtual channel. If a value of this field corresponds to '0×00', it indicates a resolution identical to a resolution of the standard video. If a value of this field corresponds to '0×XY', it indicates a resolution of a horizontal direction corresponds to 1 / (X + 1) and a resolution of a vertical direction corresponds to 1 / (Y + 1) in comparison with the resolution of the standard video. For instance, in case of depth information (depth/disparity map) having a 1/4 horizontal size and a 1/8 vertical size, this field has a value of 0×37.

If a value of the enhancement_type field corresponds to '0×01' or '0×02', a value of the linked_TSID, a value of the linked_program_number, a value of a linked_major_channel_number, a value of a linked_minor_channel_number, a value of a linked_source_id, a value of the linked_elementary_PID and the like are defined.

The linked_TSID indicates a transport_stream_id value for a program/channel including a stream to be combined with the present virtual channel to provide a complete 3D video service.

The linked_program_number indicates a program_number value for a virtual channel including a stream to be combined with the present virtual channel to provide a complete 3D video service.

The linked_major_channel_number indicates major_channel_number of a channel including a stream to be combined with the present virtual channel to provide a complete 3D video service.

The linked_minor_channel_number indicates minor_channel_number of a channel including a stream to be combined with the present virtual channel to provide a complete 3D video service.

The linked_source_id indicates a source_id value of a channel including a stream to be combined with the present virtual channel to provide a complete 3D video service.

The linked_elementary_PID indicates an elementary_PID value of a stream to be combined with the present virtual channel to provide a complete 3D video service.

Meanwhile, if a value of the enhancement_type field corresponds to '0×03', internet_linkage_information() and the like are defined.

In this case, in case of transmitting an enhancement data via the internet, the internet_linkage_information() provides information on the enhancement data. The internet_linkage_information() can include a field indicating whether an IP address corresponds to 32 bits or 128 bits, an IP address, a port number, additional information of a corresponding stream such as URI and the like, and an available time slot. In this case, the available time slot may include start time and expiration time. The available time slot may be overlapped with an avail_time_start field.

And, if a value of the enhancement_stream_format corresponds to '0×25' or '0×26', a disparity_near, a disparity_far and the like are defined in relation to depth/disparity data.

Meanwhile, if an enhancement data corresponds to depth (disparity/depth map) information, the disparity_near and the disparity_far indicate a range of the depth. The disparity_near and the disparity_far indicate disparity values corresponding to an object point nearest from a user and an object point farthest from the user, respectively.

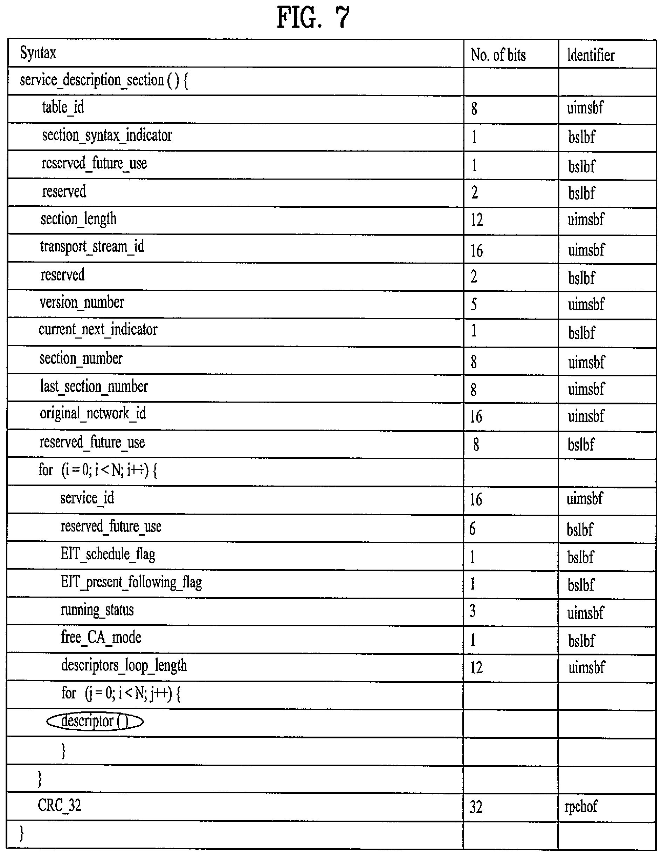

FIG. 7 is a diagram for explaining one embodiment of bit stream syntax of an SDT table section for a non-real time hybrid 3D service.

As mentioned in the foregoing description, signaling information includes not only an ATSC scheme but also a DVB scheme. In particular, FIG. 5 shows a signaling method using the STD of DVB-SI of the DVB scheme corresponding to the TVCT of the ATSC scheme shown in FIG. 4.

In the following, data included in an SDT section shown in FIG. 5 are described with reference to an attached drawing.

Similar to the TVCT mentioned earlier in FIG. 4, SDT shows services included in a specific transport stream (TS).

In the present specification, information on an enhancement data, which is interlocked with a service designated by a corresponding service_id, is signaled using a descriptor in a service level of the SDT. The information indicates whether there exist data interlocked with the corresponding service.

A table_id field is an 8-bit field and indicates that the present section belongs to an STD table section.

A section_syntax_indicator is 1-bit field. A value of this field is set to '1'.

A section_length field consists of 12 bits and first two bits set to '00'. This field indicates the number of bytes of a section including the right after this field to a CRC.

A transport_stream_id field is 16-bit field. This field plays a role of a label distinguishing a transport stream (TS).

A version_number field is 5-bit field. This field indicates a version number of sub_table. A version value increases by '1' on every change in the sub_table. If the version value reaches '31', the next version value becomes '0'.

A current_next_indicator field is 1-bit field. In case that the sub_table is currently applicable, a value of the present field is set to '1'. If the value is set to '0', it means that the sub_table is not applicable yet and the next table is valid.

A section_number field is 8-bit field. This field indicates number of the present section. For instance, a first section among the total table sections has a value of '0×00' and the value increases by '1' on every additional section including an identical table_id, an identical transport_stream_id and an identical original_network_id.

A last_section_number field is 8-bit field and indicates number of the last section (i.e., highest section_number) of a corresponding sub_table.

An orginal_network_id field is 16-bit field and corresponds to a label checking network_id of a transmission system.

A service_id is 16-bit field and plays a role of a label making the present service to be distinctive from a different service included in a TS. This field is identical to the program_number field of the program_map_section.

An EIT_schedule_flag is 1-bit field. If the present field is set to '1', it indicates that EIT schedule information for a corresponding service is included in a current TS. If the present field is set to '0', it indicates the information is not included in the TS.

An EIT_present_following_flag is 1-bit field. If the present field is set to '1', it indicates that EIT_present_following information for a corresponding service is included in a current transport stream (TS). If the present field is set to '0', it indicates that the EIT_present_following information is not included in the current transport stream (TS).

A running_status is 3-bit field and indicates a status of a service.

A free_CA_mode is 1-bit field. If the present field set to '0', it indicates that all element streams of a corresponding service are not scrambled. If the present field set to '1', it indicates that one or more streams are controlled by a CAS (conditional access system).

A descriptors_loop_length is 12-bit field and indicates a total length of a following descriptor in byte unit.

A descriptor() includes service_enhancement_descriptor() described in the following.

A CRC_32 is 32-bit field and indicates a CRC value making a register in a decoder to be zero output.

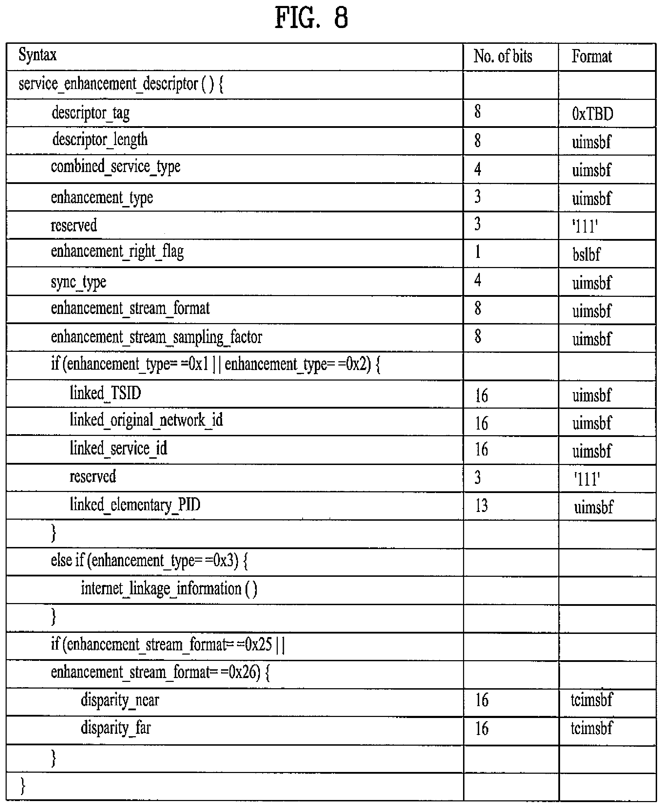

FIG. 8 is a diagram for explaining one embodiment of a bit stream syntax structure of service_enhancement_descriptor().

In the following, data of service_enhancement_descriptor() is described with reference to an attached drawing.

In the present specification, the service_enhancement_descriptor() provides information on an enhancement data configured to provide a 3D service in a manner of being interlocked with a corresponding service. For instance, the information indicates whether a service is interlocked.

For instance, the service_enhancement_descriptor() shown in FIG. 8 can be defined and included in one descriptor in a service level in SDT section of FIG. 7.

Referring to FIG. 8, the service_enhancement_descriptor() includes a combined_service_type, an enhancement_type, an enhancement_right_flag, a sync_type, an enhancement_stream_format, an enhancement_stream_sampling_factor, a linked_TSID, a linked_original_network_id, a linked_service_ID, a linked_elementary_PID, an internet_linkage_information, a disparity_near, a disparity_far.

The combined_service_type indicates a service type eventually provided when components, which are transmitted via two or more separate paths, channels, media and the like, are combined with each other. This field includes information identical to the information aforementioned in FIG. 4.

The enhancement_type identifies a type of a channel, a path or a medium on which an enhancement data for a corresponding service is transmitted. For instance, the type may include a terrestrial channel, the internet and the like. A meaning of a value of this field is identical to the content defined in FIG. 4. Yet, there exists a difference in that the value is applied in a service unit instead of an event or a program unit.

The enhancement_right_flag identifies a left video or a right video of an video when timing of a 3D service is rendered using enhancement data. For instance, if a value of the present field corresponds to '1', it indicates that the enhancement data or a view of an video obtained by the enhancement data corresponds to the right video.

The sync_type indicates information on synchronization and a combining method for a component of a corresponding service and transmission of an enhancement data.

The enhancement_stream_format indicates information on a data format, CODEC and the like of an enhancement data for a corresponding service.

The enhancement_stream_sampling_factor indicates resolution of an enhancement data. This field indicates a horizontal and vertical sampling factor for a video stream (standard video) of a corresponding service. If a value of this field corresponds to '0×00', it indicates a resolution identical to a resolution of the standard video. If a value of this field corresponds to '0×XY', it indicates a resolution of a horizontal direction corresponds to 1 / (X + 1) and a resolution of a vertical direction corresponds to 1 / (Y + 1) in comparison with the resolution of the standard video. For instance, in case of depth information (depth/disparity map) having a 1/4 horizontal size and a 1/8 vertical size, this field has a value of 0×37.

If a value of the enhancement_type field corresponds to '0×01' or '0×02', a value of the linked_TSID, a value of the linked_original_network_id, a value of the linked_service_id, a value of the linked_elementary_PID and the like are defined.

The linked_TSID indicates a transport_stream_id value for a service including a stream to be combined with the present virtual channel to provide a complete 3D video service.

The linked_original_network_id indicates an original_network_id value of a service including a stream to be combined with the present service to provide a complete 3D video service.

The linked_service_id indicates a service_id value of a service including a stream to be combined with the present service to provide a complete 3D video service.

The linked_elementary_PID indicates an elementary_PID value of a stream to be combined with the present virtual channel to provide a complete 3D video service.

In FIG. 8, a linked_program_number field is omitted via the linked_service_id field. Yet, the linked_program_number field can be further included in some cases.

In this case, detail information on a video stream corresponding to the enhancement data can be known with reference to a component_descriptor in a corresponding service. Or, a component_tag value or an elementary_PID value of a corresponding component is added to the service_enhancement_descriptor and the detail information on the video stream can be directly found out from the value of the added field. In particular, according to embodiment, a linked_component_tag field or a linked_elementary_PID field for an associated video/audio stream can be included in the service_enhancement_descriptor. Moreover, such stream-related information as linked_stream_content and linked_component_type can be included in the service_enhancement_descriptor as well.

Or, enhancement data information on a corresponding service can be signaled using a service level linkage_descriptor. In this case, information on the enhancement data interlocked with the service is included in the linkage_descriptor. Content of the information is identical to the service_enhancement_descriptor.

In the aforementioned description, for instance, the component_descriptor, the linkage_descriptor and the like may refer to the contents defined in the DVB-SI. Detail explanation is omitted at this time.

Meanwhile, if a value of the enhancement_type field corresponds to '0×03', internet_linkage_information() and the like are defined.

In this case, in case of transmitting an enhancement data via the internet, the internet_linkage_information() provides information on the enhancement data. The internet_linkage_information() can include a field indicating whether an IP address corresponds to 32 bits or 128 bits, an IP address, a port number, additional information of a corresponding stream such as URI and the like, and an available time slot. In this case, the available time slot may include start time and expiration time. The available time slot may be overlapped with an avail_time_start field.

And, if a value of the enhancement_stream_format corresponds to '0×25' or '0×26', a disparity_near, a disparity_far and the like are defined in relation to depth/disparity data.

Meanwhile, if an enhancement data corresponds to depth (disparity/depth map) information, the disparity_near and the disparity_far indicate a range of the depth. The disparity_near and the disparity_far indicate disparity values corresponding to an object point nearest from a user and an object point farthest from the user, respectively.

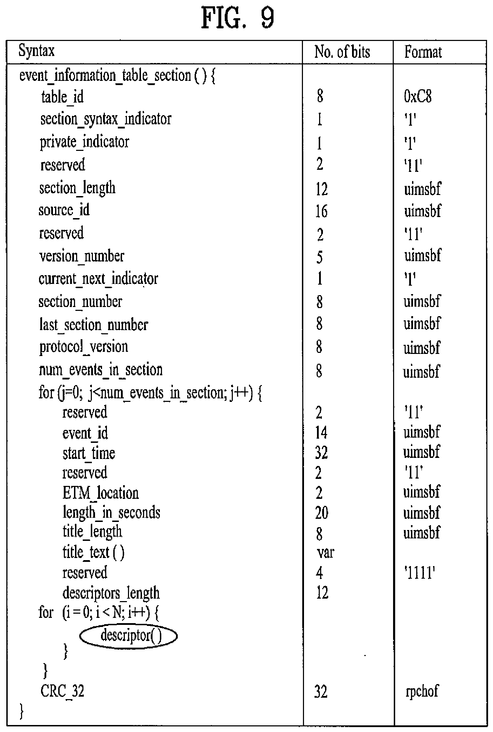

FIG. 9 is a diagram for explaining one embodiment of bit stream syntax of an EIT table section for a non-real time hybrid 3D service.

An enhancement data interlocked with a corresponding event is signaled using a descriptor in an event level of EIT.

The EIT includes information on titles of events on defined virtual channels, start times and the like.

In the following, data included in an EIT section is described in more detail with reference to FIG. 6.

A table_id field is an 8-bit field and is set to '0×CB'. This field indicates that a corresponding section belongs to the EIT.

A section_syntax_indicator is 1-bit field. A value of this field is set to '1'.

A private_indicator is 1-bit field. A value of this field is set to '1'.

A section_length field consists of 12 bits. This field indicates the number of remaining bytes of a section from the right after the present field to a CRC_32 field.

A source_id is 16-bit field and indicates source_id of a virtual channel delivering an event described in this section.

A version_number field is 5-bit field. This field indicates a version number of EIT-i.

A current_next_indicator field is 1-bit field. This field is always set to '1' for an EIT section.

A section_number field is 8-bit field. This field indicates a section number of the present section.

A last_section_number field is 8-bit field and indicates a section number of the last section among EIT table sections.

A protocol_version field is 8-bit field and plays a role of permitting a table of a different type different from a table defined by a current protocol in the future. '0' is a value only valid in the current protocol.

A num_event_in_section field is 8-bit field and indicates the number of events in the present section. For instance, if a value of the present field is set to 0, it indicates that there is no event defined in the present section.

An event_id is 14-bit field and indicates an identifier (event ID) of a described event.

A start_time is 32-bit field and indicates a start time of an event in GPS (global positioning system) second unit after 1980.1.6. 00:00:00 UTC (universal time coordinated). In any virtual channel, a value of the start_time field cannot be less than an end time (end_time) of a previous event. In this case, the end time is defined by a value of sum of the start time (start_time) of an event and a length (length_in_seconds) of the event.

An ETM_location field is 2-bit field and indicates existence and a location of an extended text message (ETM).

A length_in_seconds field indicates duration of an event in a second unit.

A title_length field indicates a length of title_text() in a byte unit. If a value of this field corresponds to 0, it indicates that there is no title of a corresponding event.

A title_text() indicates a name of an event of a multiple string structure format.

A descriptor_length field indicates a total length of a following event descriptor in a byte unit.

A descriptor() field includes 0 or more descriptors in EIT due to a for statement (for loop). A type of a descriptor defined to use in the EIT may include conten_advisory_descriptor(), the caption_service_descriptor(), the AC-3 audio_stream_descriptor() and the like. And, the descriptor() field may also include event_enhancement_descriptor() as a descriptor of the EIT, which is described later.

A CRC_32 field is 32-bit field and indicates a CRC value making a register in a decoder to be zero output.

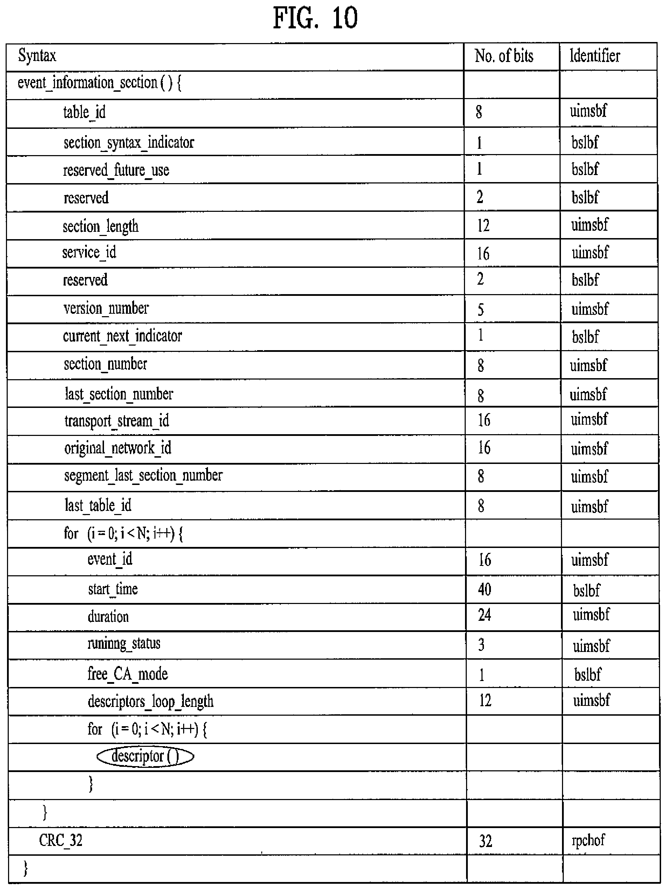

FIG. 10 is a diagram for explaining a different embodiment of bit stream syntax of an EIT table section for a non-real time hybrid 3D service.

For instance, the EIT mentioned earlier in FIG. 6 shows an EIT section used in the ATSC scheme and the EIT mentioned earlier in FIG. 7 shows the EIT of DVB-SI used in the DVB scheme.

In the following, data included in an EIT section is described in more detail with reference to FIG. 7.

Similar to the EIT defined earlier in FIG. 6, the EIT provides information on a chronological order of events included in each service.

An enhancement data interlocked with a corresponding event is signaled using a descriptor in an event level of the EIT.

A table_id field is an 8-bit field and indicates that the present section belongs to an EIT section.

A section_syntax_indicator is 1-bit field. A value of this field is set to '1'.

A section_length field consists of 12 bits. This field indicates the number of bytes of a section including the right after the present field to a CRC.

A service_id is 16-bit field and plays a role of a label making the present service to be distinctive from a different service included in a TS. This field has a value identical to a value of the program_number field of the PMT section.

A version_number field is 5-bit field. This field indicates a version number of a sub_table. A version value increases by '1' on every change in the sub_table. If the version value reaches '31', the next version value becomes '0'.

A current_next_indicator field is 1-bit field. If the sub_table is currently applicable, a value of this field is set to 1.

A section_number field is 8-bit field. This field indicates a section number of the present section. For instance, a first section of EIT table sections has a value of '0×00' and the value increases by '1' on every additional section including an identical table_id, an identical transport_stream_id and an identical original_network_id.

A last_section_number field is 8-bit field and indicates a section number of the last section (i.e., highest section_number) of a corresponding sub_table.

A transport_stream_id field is 16-bit field. This field plays a role of a label distinguishing a transport stream (TS).

An original_network_id is 16-bit field. This field is a label for checking network_id of a transmission system.

A segment_last_section_number is 8-bit field and indicates a section number of a segment last section of the sub_table. For a sub_table not divided by a segment, this field has a value identical to a value of the last_section_number field.

A last_table_id is 8-bit field and indicates a lastly used table_id.

An event_id is 16-bit field and includes an identifier (ID number) indicating an event. A value of the present field is uniquely allocated in a service definition.

A start_time is 40-bit field and includes event start time of a UTC form and a MJD (modified Julian date) form. This field includes 16 bits coded by 16 LSBs of the MJD and 24 bits coded by 6 digits of 4-bit Binary Coded Decimal (BCD). If a start time is not defined (e.g., NVOD service), all bits are set to 1.

Duration is 24-bit field and includes duration of an event in time, minute and second unit. Hence, this field includes 24 bits in a manner of being represented by 6 digits 4-bit BCD.

A running_status is 3-bit field and indicates a status of an event.

A free_CA_mode is 1-bit field. If the present field is set to '0', it indicates that all element streams of a corresponding service are not scrambled. If the present field is set to '1', it indicates that one or more streams are controlled by a CAS (conditional access system).

A descriptors_loop_length is 12-bit field and indicates a total length of a following descriptor in byte unit.

A CRC_32 field is 32-bit field and indicates a CRC value making a register in a decoder to be zero output.

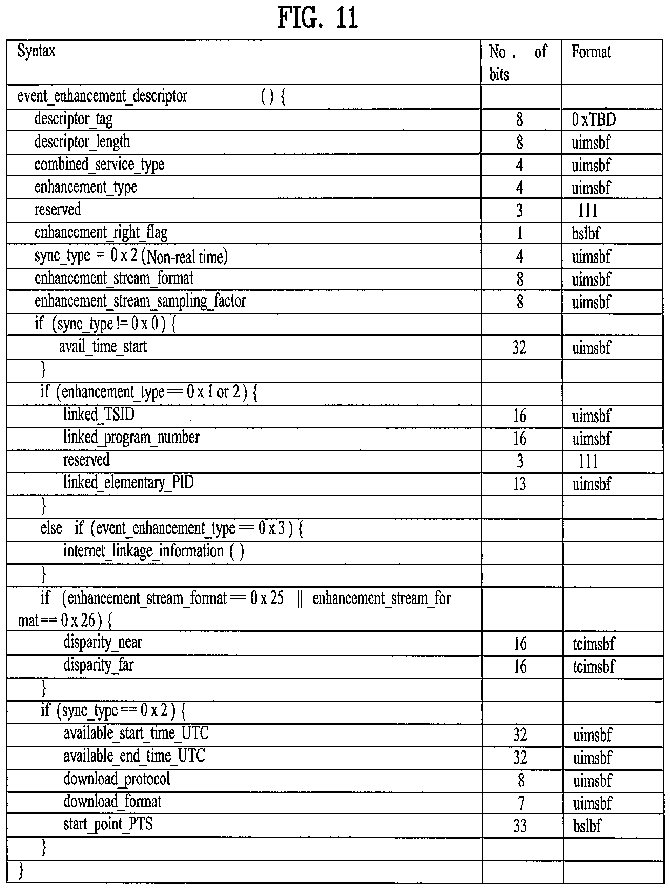

FIGS. 11 to 13 are diagrams for explaining one embodiment of event_enhancement_descriptor() for a non-real time hybrid 3D service.

In the following, data of event_enhancement_descriptor for a non-real time hybrid 3D service is described in detail with reference to an attached drawing.

Referring to FIGS. 11 to 13, the event_enhancement_descriptor() for a non-real time hybrid 3D service can be defined and/or included in a descriptor form in an EIT section mentioned earlier in FIGS. 9 to 10. Although it is not explained in detail in the aforementioned enhancement_descriptor, a similar field may refer to contents described in the following.

In this case, the event_enhancement_descriptor() includes a combined_service_type, an enhancement_type, an enhancement_right_flag, a sync_type, an enhancement_stream_format, an enhancement_stream_sampling_factor, an avail_time_start, a linked_TSID, a linked_program_number, a linked_elementary_PID, an internet_linkage_information, a disparity_near, a disparity_far, an available_start_time_UTC, an available_end_time_UTC, a download_protocol, a download_format, a start_time_PTS and the like. Meanwhile, in this case, each data may be valid or invalid according to a prescribed condition.

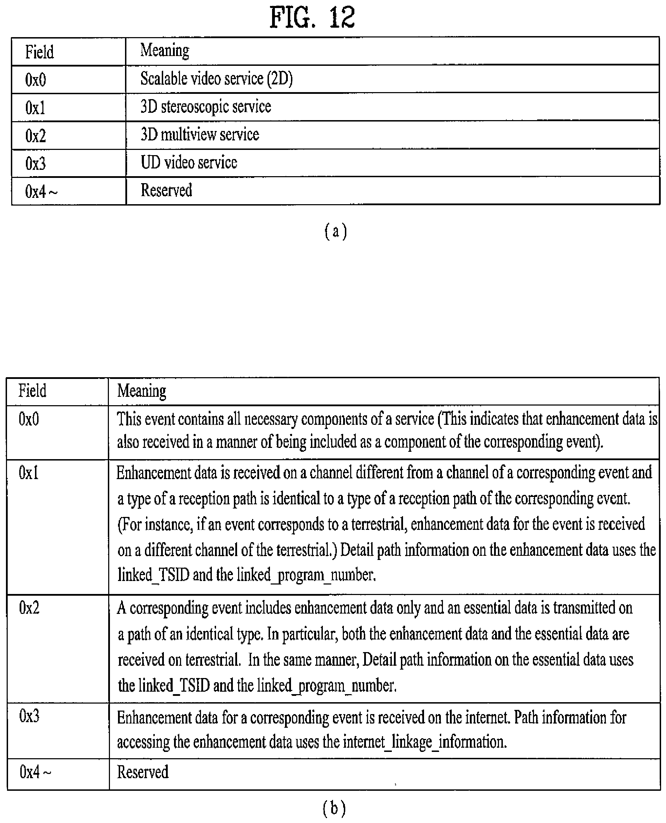

FIG. 12 (a) is a diagram for one embodiment of the combined_service_type.

The combined_service_type is a field indicating a service type eventually provided when components, which are transmitted via two or more separate paths, channels, media and the like, are combined with each other. In other word, this field indicates a type of a final service provided in a manner of combining a corresponding event with an enhancement data, which is received via a position designated by the present descriptor.

Referring to FIG. 12 (a), if a value of the combined_service_type corresponds to '0×0', '0×1', '0×2' and '0×3', it indicates a 2D scalable video service, a 3D stereoscopic video service, a 3D multi-view service and Ultra definition (UD) video service, respectively.

The enhancement_right_flag identifies a left video or a right video of a corresponding video when timing of a 3D service is rendered using enhancement data. For instance, if a value of the present flag corresponds to '1', it indicates that the enhancement data or a view of an video obtained by the enhancement data corresponds to the right video.

FIG. 12 (b) is a diagram for one embodiment of values of the enhancement_type.

As mentioned in the foregoing description, the enhancement_type identifies a type of a path on which an enhancement data for a corresponding event is transmitted. For instance, the type may include a terrestrial channel, the internet and the like.

In this case, referring to FIG. 12 (b), if a value of the enhancement_type corresponds to '0×0', it indicates that a corresponding event includes all necessary components for a service. This indicates that enhancement data is also received in a manner of being included as a component of the corresponding event.

If a value of the enhancement_type corresponds to '0×1', enhancement data is received on a channel different from a channel of a corresponding event and a type of a reception path is identical to a type of a reception path of the corresponding event. For instance, if an event corresponds to a terrestrial, enhancement data for the event is received on a different channel of the terrestrial. Detail path information on the enhancement data uses the linked_TSID and the linked_program_number.

If a value of the enhancement_type corresponds to '0×2', it indicates that a corresponding event includes enhancement data only and an essential data is transmitted on a path of an identical type. In particular, both the enhancement data and the essential data are received on terrestrial. In the same manner, Detail path information on the essential data uses the linked_TSID and the linked_program_number.

If a value of the enhancement_type corresponds to '0×3', it indicates that enhancement data for a corresponding event is received on the internet. Path information for accessing the enhancement data uses the internet_linkage_information.

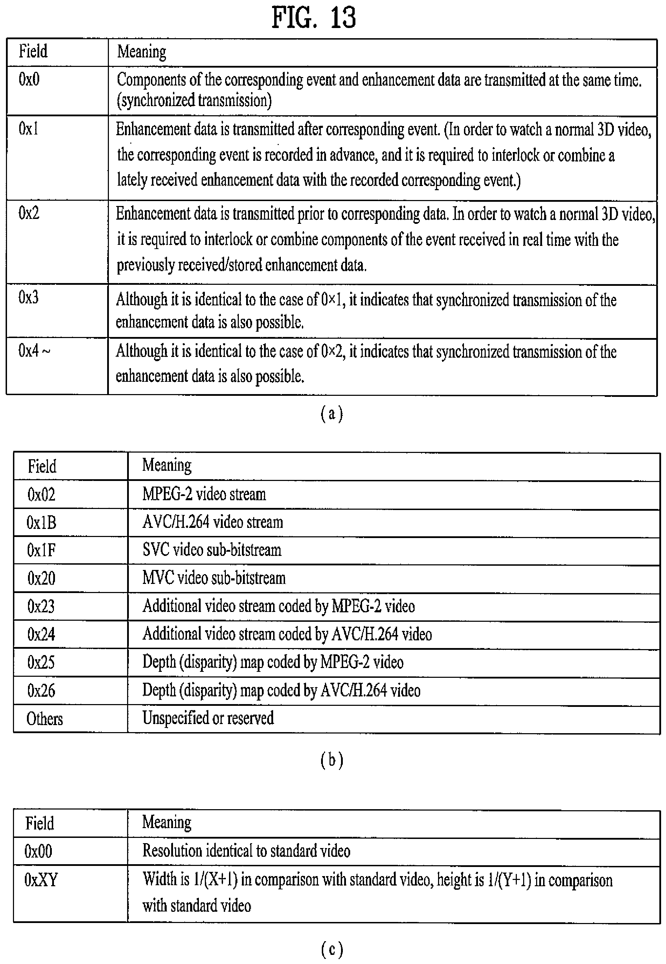

FIG. 13 (a) is a diagram for one embodiment of values of the sinc_type.

The sync_type indicates synchronization and a combining method for components of a corresponding event and enhancement data transmission.

If a value of the sync_type corresponds to '0×0', the components of the corresponding event and the enhancement data are transmitted at the same time. It may be called synchronized transmission.

If a value of the sync_type corresponds to '0×1', the enhancement data is transmitted after the corresponding data. In order to watch a normal 3D video, the corresponding event is recorded in advance, and it is required to interlock or combine a lately received enhancement data with the recorded corresponding event.

If a value of the sync_type corresponds to '0×2', the enhancement data is transmitted prior to the corresponding data. In order to watch a normal 3D video, it is required to interlock or combine components of the event received in real time with the previously received/stored enhancement data. In particular, it is able to indicate a non-real time hybrid 3D service/event.

If a value of the sync_type corresponds to '0×3', although it is identical to the case of '0×1', it indicates that synchronized transmission of the enhancement data is also possible.

If a value of the sync_type corresponds to '0×4', although it is identical to the case of '0×2', it indicates that synchronized transmission of the enhancement data is also possible.

FIG. 13 (b) is a diagram for one embodiment of values of the enhancement_stream_format.

The enhancement_stream_format indicates information on a data format, CODEC and the like of enhancement data for a corresponding event.

FIG. 13 (c) is a diagram for one embodiment of values of the enhancement_stream_sampling_factor.

The enhancement_stream_sampling_factor indicates resolution of an enhancement data. This field indicates a horizontal and vertical sampling factor for a video stream (standard video) of a corresponding event.

If a value of this field corresponds to '0×00', it indicates a resolution identical to a resolution of the standard video. If a value of this field corresponds to '0×XY', it indicates a resolution of a horizontal direction corresponds to 1 / (X + 1) and a resolution of a vertical direction corresponds to 1 / (Y + 1) in comparison with the resolution of the standard video. For instance, in case of depth information (depth/disparity map) having a 1/4 horizontal size and a 1/8 vertical size, this field has a value of '0×37'.

The avail_time_start indicates a start time on which enhancement data, which configures a 3D video content in a manner of being combined with components of a current event, is transmitted. This field is 32-bit field and indicates a start time of this event in GPS second unit after 1980.1.6 00:00:00 UTC. If a value of this field corresponds to '0', it indicates that the enhancement data is always available.

The linked_TSID indicates a value of a transport_stream_id of a transport stream (TS) in which enhancement data is included.

The linked_program_number indicates a value of a program_number of a program/channel in which enhancement data is included. In particular, a stream in which the enhancement data is included can be uniquely defined using the linked_TSID and the linked_program_number.

Along with the linked_TSID and the linked_program_number, the linked_elementary_PID can include a value of an elementary_PID for enhancement data in the event_enhancement_descriptor().

In case of transmitting an enhancement data via the internet, the internet_linkage_information provides information on the enhancement data. The internet_linkage_information can include a field indicating whether an IP address corresponds to 32 bits or 128 bits, an IP address, a port number, additional information of a corresponding stream such as URI and the like, and an available time slot. In this case, the available time slot may include start time and expiration time. The available time slot may be overlapped with an avail_time_start field.

If an enhancement data corresponds to depth (disparity/depth map) information, the disparity_near and the disparity_far indicate a range of the depth. The disparity_near and the disparity_far indicate disparity values corresponding to an object point nearest from a user and an object point farthest from the user, respectively.

In the aforementioned descriptor, it is able to signal a multiple enhancement stream as well. To this end, it is able to signal n number of enhancement streams using a loop in the descriptor.

In particular, in case of a non-real time transmission, if the sinc_type corresponds to '0×2', download information is further included irrespective of a transmission channel and a medium.

In the following, the non-real time download information is explained in more detail with reference an attached drawing.

The available_start/end_time_UTC is 32-bit field and indicates time information for which a download of an additional video is available. This field is represented by UTC time and may be used in a duration form instead of end time.

The download_protocol is 8-bit field and indicates a protocol used for downloading an additional video. For instance, following schemes can be used.

If a value of the present field corresponds to '0×00', '0×01', '0×02' and '0×03', it may be defined by HTTP, FTP, FLUTE and NRT protocol, respectively.

Meanwhile, the download_format is 7-bit field and indicates a storing form of an additional video. For instance, following schemes may be used.

If a value of the present field corresponds to '0×00' and '0×02', it may be defined by MPEG-2 TS and MPEG-4 file format (ISO compatible), respectively.

And, the start_point_PTS is 33-bit field and indicates a PTS value of a timing on which a playback of an additional video starts. This field can be used for synchronizing the additional video with a standard video.

In the foregoing description, if the download_format corresponds to '0', i.e., the download_format corresponds to MPEG-2 transport stream (TS), a PTS is used by directly comparing with each other. If the download_format corresponds to '0', i.e., the download_format corresponds to MPEG-4 file format, a CT value of a corresponding sample can be used in a manner of calculating the CT value according to the aforementioned Formula.

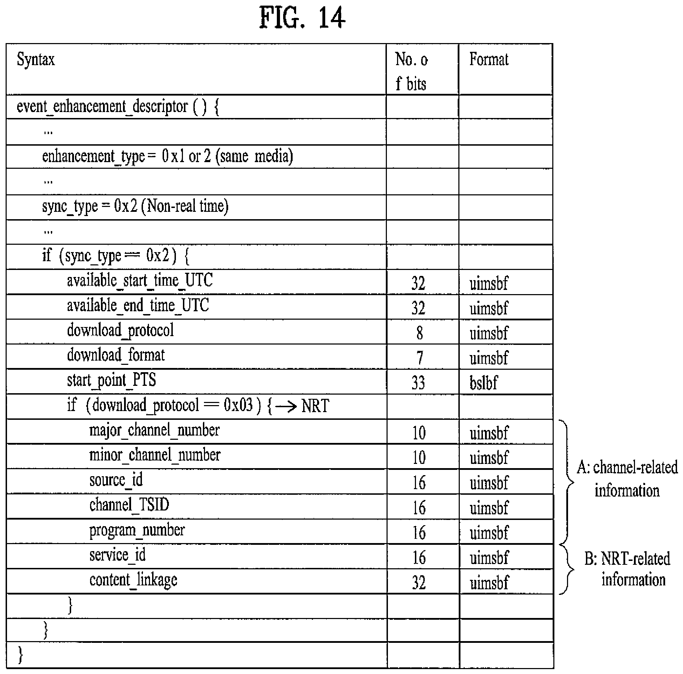

FIG. 14 is a diagram for explaining a different embodiment of event_enhancement_descriptor() for a non-real time hybrid 3D service.

In the following, data of enhancement_descriptor for a non-real time hybrid 3D service for a different embodiment is described in detail with reference to an attached drawing.

Referring to FIG. 14, the event_enhancement_descriptor() for a non-real time hybrid 3D service can be defined and included in a descriptor form in an EIT section mentioned earlier in FIGS. 9 to 10.

In this case, the event_enhancement_descriptor() includes a combined_service_type, an enhancement_type, an enhancement_right_flag, a sync_type, an enhancement_stream_format, an enhancement_stream_sampling_factor, an avail_time_start, a linked_TSID, a linked_program_number, a linked_elementary_PID, an internet_linkage_information, a disparity_near, a disparity_far, an available_start_time_UTC, an available_end_time_UTC, a download_protocol, a download_format, a start_time_PTS, a major_channel_number, a minor_channel_number, a source_id, a channel_TSID, a program_number, a service_id, a content_linkage and the like. Meanwhile, in this case, each data may be valid or invalid according to a prescribed condition.

In the following, since the aforementioned data until the start_time_PTS are identical to the contents mentioned earlier in FIG. 13, detail explanation is omitted at this time and may refer to the aforementioned contents instead.

In the following description, parts different from FIG. 13 are mainly described.

In particular, the event_enhnacement_descriptor of FIG. 14 is different from the event_enhnacement_descriptor of FIG. 13 in that a value of the download_protocol corresponds to '0×03', i.e., NRT service or channel.

In this case, as shown in the diagram, it may further include additional information including the major_channel_number, the minor_channel_number, the source_id, the channel_TSID, and the program_number for a virtual channel on which NRT service is performed and program map information and the service_id, the content_linkage and the like to identify NRT content.

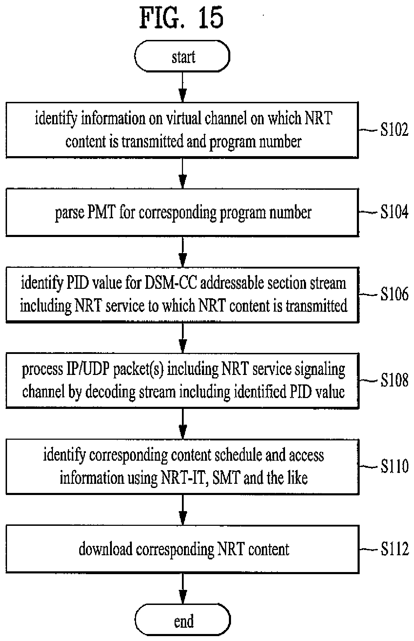

FIG. 15 is a flowchart for explaining one embodiment of an operation of a receiver in relation to an NRT service shown in FIG. 14.

Information on a virtual channel on which NRT content is transmitted and a program number are identified [S102].

PMT for the program number is parsed [SI04]. In this case, service_ID_descriptor can be used in the step S104.

A packet identifier (PID) value for a DSM-CC addressable section stream including an NRT service to which the NRT content is transmitted is identified [S106]. In this case, the NRT service can be identified by the service_id and the DSM-CC addressable section stream can be identified by a value of stream_type. In this case, the value of the stream_type may correspond to '0×0D'.

IP/UDP packet(s) including an NRT service signaling channel is processed by decoding a stream including the identified packet identifier [S108].

Content schedule and access information are identified using NRT-IT (non-real time-information table), SMT (service map table) and the like [S110].

The NRT content is downloaded [S112].

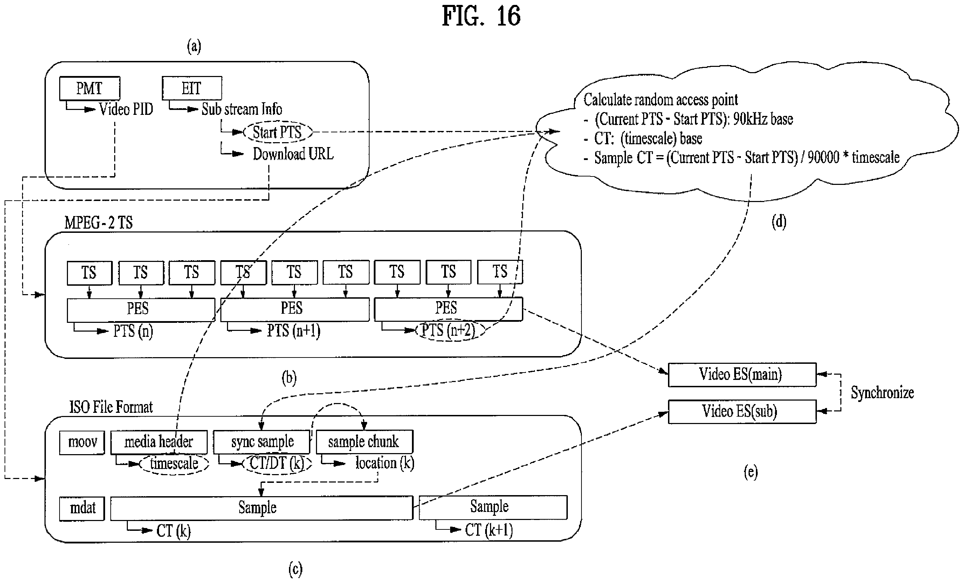

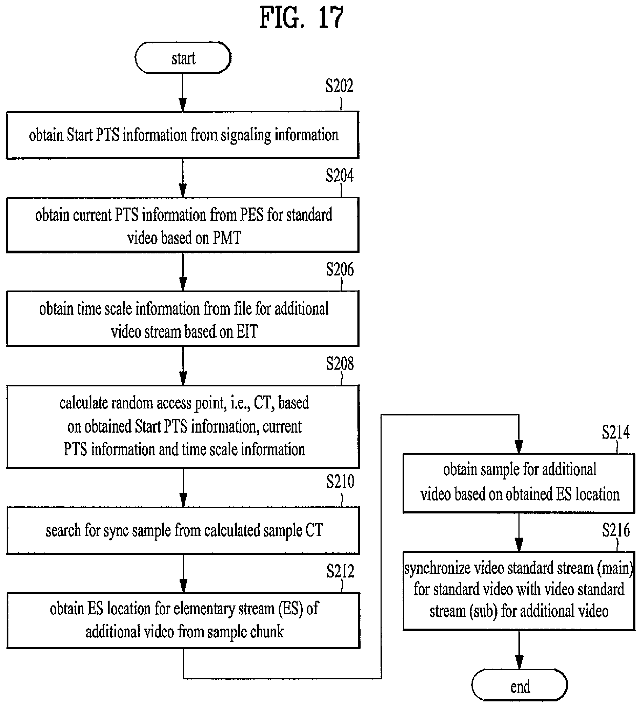

FIG. 16 is a diagram for explaining one embodiment of a synchronization scenario in a non-real time hybrid 3D service and FIG. 17 is a flowchart for explaining the synchronization scenario shown in FIG. 16.

One embodiment of a method of processing a signal for a 3D service disclosed in the present specification includes the steps of receiving a signal including content for the 3D service and signaling information, extracting an event information table from the received signaling information and decoding the event information table, if an event from a descriptor in the decoded event information table corresponds to an event for the 3D service, identifying whether the event corresponds to a non-real time 3D service, identifying whether an enhancement file of the identified non-real time 3D service is downloaded, calculating CT for synchronization and searching for a position of a sample based on the calculated CT and playing 3D content in a manner of performing a synchronization process based on the calculated CT.

In this case, the method can further include the steps of extracting a program map table from the signaling information and decoding the program map table, extracting PID of a video stream for a standard video from the decoded program map table and obtaining current PTS from the video stream for the standard video.

And, the method can further include the step of obtaining a start PTS from the descriptor in the event information table.

And, the method can further include the step of extracting enhancement file acquisition information on an additional video from the descriptor in the event information table.

And, the method can further include the step of extracting time scale information on an enhancement file based on the extracted enhancement file acquisition information.

And, the descriptor in the event information table may correspond to an event_enhancement_descriptor.

And, whether the event corresponds to the event for the 3D service can be identified according to whether there exist the event_enhancement_descriptor.

And, the enhancement file may correspond to one of an MPEG-2 transport stream (TS) and ISO-based file format.

And, the CT can be calculated based on the obtained current PTS, the start PTS and the extracted time scale information.

And, a sync sample can be found based on the calculated CT, a sample chunk can be found based on the found sync sample and can obtain a position of a standard stream for an additional video from the found sample chunk. In this case, for instance, the time scale information is extracted from a media header. Meanwhile, the media header, the sync sample and the sample chunk are all included in a moov box. And, a location (k) in the moov box is applied to a sample including CT (k) in a mdat box.

In the following, the scenario of FIG. 16 is explained in sequential with reference to the flowchart of FIG. 17.

FIG. 16 (a) shows a signaling information processing block, FIG. 16 (b) shows a standard video processing block, FIG. 16 (c) shows an additional video processing block, FIG. 16 (d) shows a random access point processing block, and FIG. 16 (e) shows a synchronization processing block. In this case, FIGS. 16 (a) to (e) are represented as blocks for clarity. It is not necessary for the blocks to be hardware configurations. The blocks are distinguished from each other to more easily explain a process of synchronization scenario only.

And, the synchronization scenario shown in FIGS. 16 and 17 mainly concerns contents processed in a reception part. This is because the synchronization mainly causes a problem in a process of implementing a 3D service in the reception part. Hence, it is necessary for a transmission part to appropriately provide synchronization information to the signaling information for the convenience of the processing of the reception part.

First of all, the receiver receives data for a 3D service and a signal including signaling information. Subsequently, the receiver demultiplexes and decodes the signaling information such as shown in FIG. 16 (a) in a manner of passing through a process such as a process shown in FIG. 2.

The receiver extracts a video packet identifier (video PID) for a standard video from PMT among the decoded signaling information and identifies the video PID.

And, the receiver extracts information on an additional video stream from EIT among the decoded signaling information. In this case, for instance, the information on the additional video stream includes address information for transmitting and receiving the additional video stream and synchronization information. Meanwhile, as an example, the address information includes URL information. And, as an example, the synchronization information includes Start PTS information.

In other word, as shown in FIG. 16 (a), the receiver obtains the Start PTS information from the signaling information [S202].

And, the receiver obtains current PTS information from PES for the standard video shown in FIG, 16 (b) based on the PMT shown in FIG. 16 (a) [S204]. Meanwhile, the receiver obtains time scale information from a file for the additional video stream shown in FIG. 16 (c) based on EIT shown in FIG. 16 (a) [S206]. In this case, for instance, the step S204 and the step S206 can be performed at the same time or in sequential.

Subsequently, a random access point, i.e., CT is calculated based on the Start PTS information, the current PTS information and the time scale information obtained via the step S202 to the step S206. In this case, for instance, a sample CT can be calculated by Formula 1 in the following.

[Formula 1]

$$\text{Sample CT} = (\text{current PTS} - \text{start PTS}) / 90{,}000 * \text{time scale}$$

In this case, the sample CT corresponds to a time scale base and (current PTS - start PTS) is calculated by 90 KHz base for example, by which the present specification may be non-limited.

Subsequently, a sync sample is found out from the sample CT calculated in the step S208 [S210].

Subsequently, an ES location for an elementary stream (ES) of an additional video is obtained from a sample chunk [S212].

A sample for the additional video is obtained based on the ES location obtained in the step S212 [S214].

Subsequently, the receiver synchronizes a video elementary stream (main) for the standard video with a video elementary stream (sub) for the additional video [S216].

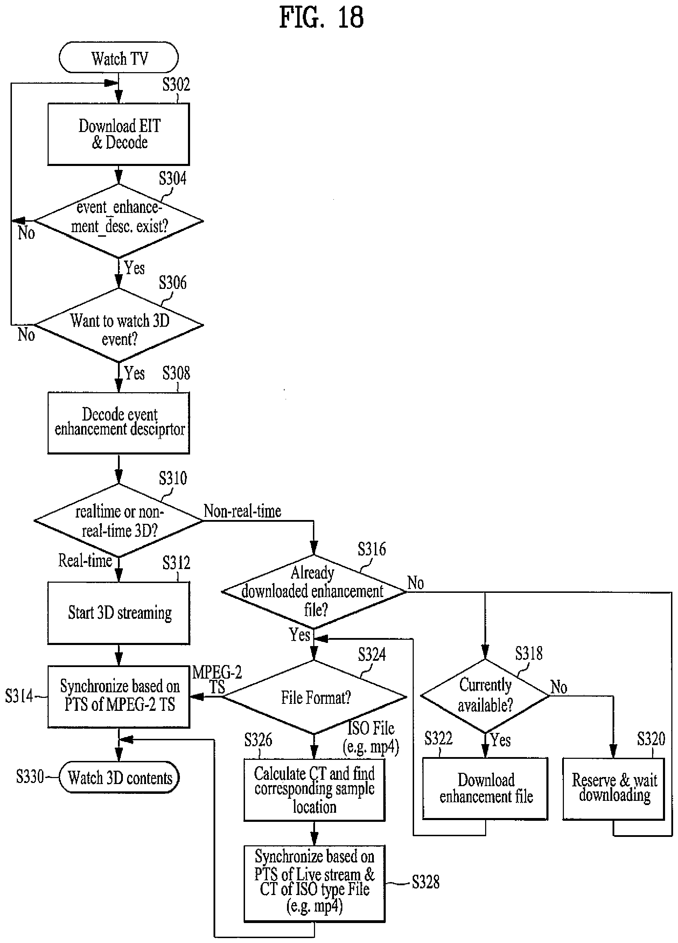

FIG. 18 is a flowchart for explaining one embodiment of a method of processing a signal for a non-real time hybrid 3D service.

FIG. 18 is mainly classified into a process of determining whether to watch 3D, a process of watching, a process of downloading and the like.

When a user turns on a receiver and watches, the receiver receives contents and signaling information for the contents from a corresponding channel and decodes the signaling information.

For instance, the receiver downloads EIT and decodes the EIT [S302].

The receiver determines whether there exist an event_ehnacement_descriptor in the EIT [S304].

If it is determined in the step S304 as the event_ehnacement_descriptor exists, the receiver can identify that a corresponding event is an event for a 3D service. Hence, in order to make the event to be identifiable, the receiver generates a UI (user interface) or an OSD (on screen display) data and asks the user whether to watch a 3D event [S306].

If the user accepts or requests the 3D event, the receiver decodes the event_ehnacement_descriptor [S308].

Whether a real time or a non-real time 3D service is provided is identified from the event_ehnacement_descriptor decoded in the step S308 [S310].

In the step S310, if it is determined that the real time 3D service is provided, the receiver starts a 3D streaming [S312], synchronizes based on PTS of MPEG-2 transport stream (TS) [S314] and the user can watch 3D content [S330].

On the contrary, in the step S310, if it is determined that the non-real time 3D service is provided, the receiver determines whether an enhancement file is downloaded [S316].

In the step S316, if it is determined that the enhancement file is not downloaded yet, the receiver determines whether download is currently available [S318]. As a result, if the download is not available, the receiver postpones or waits for the download until the download becomes available [S320]. Yet, in the step S318, if it is determined that the download is currently available, the receiver downloads the enhancement file [S322].

In the step S316, if it is determined that the enhancement file is already downloaded or if the download of the enhancement file is completed via the step S322, the receiver identifies a type of the enhancement file. In other word, the receiver determines whether the type of the enhancement file corresponds to an ISO-based file format [S324].

In the step S324, if it is determined that the type of the enhancement file corresponds to MPEG-2 transport stream instead of the ISO-based file format, a process of the step S314 is performed.

Yet, in the step S324, if it is determined that the type of the enhancement file corresponds to the ISO-based file format such as MP4, the receiver calculates CT for synchronization and searches for a position of a sample based on the calculated CT [S326].

Subsequently, a synchronization process is performed based on the PTS for a live stream and the CT for the ISO-based file format [S328].

By doing so, the user watches 3D contents [S330].

The process of watching is explained. As mentioned in the foregoing description, in case of a real time 3D, the receiver receive the real time 3D in a manner of receiving streaming information and starts 3D watch in a manner of synchronizing the received streaming information with a legacy video based on PTS of MPEG-2 TS. In case of a non-real time 3D, if a pre-downloaded additional video exists in the receiver, 3D watch starts in a manner of synchronizing the pre-downloaded additional video with a legacy video based on the PTS of MPEG-2 TS or the CT of the ISO-based file format depending on a file format.

The process of downloading is explained. In case of a non-real time 3D, if an additional video file is not downloaded yet, the receiver checks whether download is available and downloads the additional video file using a protocol scheme designated by a descriptor. In this case, if the download is not available, the receiver reserves the download and downloads the additional video file later.

As mentioned in the foregoing description, according to the present specification, first of all, a 3DTV service of a hybrid scheme can be processed. Second, time synchronization between a standard video and an additional video can be performed for a 3DTV service of a hybrid scheme. Third, signal transmission efficiency can be increased while backward compatibility with a legacy scheme is maintained. Moreover, a 3DTV service of a higher compression rate and a higher resolution compared to a legacy scheme can be provided or processed. And, according to the present specification, the present invention can be applied to not only a stereoscopic 3DTV service but also a multi-view 3DTV service.

MODE FOR INVENTION

As mentioned in the foregoing description, various embodiments of the present invention are explained in the aforementioned best mode for the invention.

INDUSTRIAL APPLICABILITY

As mentioned in the foregoing description, the present invention can be wholly or partially applied to a broadcasting or communication system.

**Claims**

1. A method of processing a 3D service, comprising the steps of:

receiving a first signal via a broadcasting channel, the first signal carrying a base view component for the 3D service, the base view component being multiplexed with signaling information of a private section, wherein the private section includes a descriptor including information for accessing an additional view component to be paired with the base view component;
decoding an event information table from the signaling information;
identifying whether an event in the decoded event information table corresponds to a non-real time 3D service;
identifying whether an enhancement file of the identified non-real time 3D service is downloaded;
receiving a second signal via internet, the second signal carrying the additional view component for the 3D service; **characterized in**
obtaining a current Presentation Time Stamp, PTS, information of the base view component;
obtaining a start PTS and time scale information of the additional view component from the decoded event information table,
calculating a composition time (CT) for synchronization, wherein the composition time is calculated based on the time scale information and difference between current PTS information and start PTS information of the base view component; and
rendering 3D content in a manner of performing a synchronization process based on the calculated CT.

2. The method of claim 1, wherein the enhancement file corresponds to one of an MPEG-2 transport stream (TS) and an ISO-based file format.

3. The method of claim 1, wherein a sync sample is found out based on a value of the calculated CT, wherein a sample chunk is found out based on the found sync sample and wherein a position of an elementary stream for the additional view component is obtained based on the found sample chunk.

4. A 3D service processing device, comprising:

a first reception part (212) configured to receive a first signal via a broadcasting channel, the first signal carrying a base view component for the 3D service, the base view component being multiplexed with signaling information of a private section, wherein the private section includes a descriptor including information for accessing an additional view component to be paired with the base view component;
a signaling information decoder (220) configured to extract an event information table from the signaling information and decode the event information table;
a second reception part (232) configured to receive a second signal via internet, the second signal carrying the additional view component for the 3D service,
a controller configured to identify whether the event in the decoded event information table corresponds to a non-real time 3D service,
the controller configured to identify whether an enhancement file of the identified non-real time 3D service is downloaded, **characterized in**
the controller configured to obtain a current Presentation Time Stamp, PTS, information of the base view component and obtain a start PTS and time scale information of the additional view component, and calculate a composition time, CT, for synchronization , the controller configured to render 3D content in a manner of performing a synchronization process based on the calculated CT,
wherein the composition time is calculated based on the time scale information and difference between current PTS information and start PTS information of the base view component.

5. The 3D service processing device of claim 4, wherein the controller is configured to control the time scale information on the enhancement file to be extracted based on the extracted acquisition information on the enhancement file.

**Patentansprüche**

1. Verfahren zur Verarbeitung eines 3D-Dienstes, umfassend die Verfahrensschritte:

   Empfangen eines ersten Signals über einen Broadcast-Kanal, wobei das erste Signal eine Basisansicht-Komponente für den 3D-Dienst überträgt, wobei die Basisansicht-Komponente mit Signalisierungsinformationen eines privaten Bereichs gemultiplext wird,
   wobei der private Bereich einen Deskriptor enthält, welcher Informationen über den Zugriff auf eine Zusatzansicht-Komponente enthält, die mit der Basisansicht-Komponente gepaart werden kann;
   Dekodieren einer Ereignisinformations-Tabelle aus den Signalisierungsinformationen;
   Identifizieren, ob ein Ereignis in der dekodierten Ereignisinformations-Tabelle einem Nicht-Echtzeit-3D-Dienst entspricht;
   Identifizieren, ob eine Verbesserungsdatei des identifizierten Nicht-Echtzeit-SD-Dienstes heruntergeladen ist;
   Empfangen eines zweiten Signals über das Internet, wobei das zweite Signal die Zusatzansicht-Komponente für den 3D-Dienst überträgt;
   **gekennzeichnet durch**
   Beziehen einer aktuellen Vorführungszeitstempel-Information, PTS-Information, der Basisansicht-Komponente;
   Beziehen einer Anfangs-PTS- und Zeitskala-Information der Zusatzansicht-Komponente aus der dekodierten Ereignisinformations-Tabelle,
   Berechnen einer Kompositionszeit (CT) zur Synchronisierung, wobei die Kompositionszeit auf der Grundlage der Zeitskala-Information und der Differenz zwischen der aktuellen PTS-Information und der Anfangs-PTS-Information der Basisansicht-Komponente berechnet wird; und
   Rendern der 3D-Inhalte durch die Ausführung eines Synchronisierungsprozesses auf der Grundlage der berechneten CT.

2. Verfahren nach Anspruch 1, wobei die Verbesserungsdatei entweder einem MPEG-2-Transportstrom (TS) oder einem ISO-basierten Dateiformat entspricht.

3. Verfahren nach Anspruch 1, wobei ein Sync-Muster auf der Grundlage eines Wertes der berechneten CT herausgefunden wird,
   wobei ein Muster-Teil auf der Grundlage des gefundenen Sync-Musters herausgefunden wird und wobei eine Position eines Elementarstroms für die Zusatzansicht-Komponente auf der Grundlage des gefundenen Muster-Teils bezogen wird.

4. 3D-Dienst-Verarbeitungsvorrichtung, umfassend:

   ein erstes Empfangsteil (212), das dazu konfiguriert ist, ein erstes Signal über einen Broadcast-Kanal zu empfangen, wobei das erste Signal eine Basisansicht-Komponente für den 3D-Dienst überträgt, wobei die Basisansicht-Komponente mit Signalisierungsinformationen eines privaten Bereichs gemultiplext wird,
   wobei der private Bereich einen Deskriptor enthält, welcher Informationen über den Zugriff auf eine Zusatzansicht-Komponente enthält, die mit der Basisansicht-Komponente gepaart werden kann;
   einen Signalisierungsinformations-Dekodierer (220), der dazu konfiguriert ist, eine Ereignisinformations-Tabelle aus den Signalisierungsinformationen zu entnehmen und die Ereignisinformations-Tabelle zu dekodieren;
ein zweites Empfangsteil (232), das dazu konfiguriert ist, ein zweites Signal über das Internet zu empfangen, wobei das zweite Signal die Zusatzansicht-Komponente für den 3D-Dienst überträgt,
eine Steuereinheit, die dazu konfiguriert ist, zu identifizieren, ob das Ereignis in der dekodierten Ereignisinformations-Tabelle einem Nicht-Echtzeit-3D-Dienst entspricht,
wobei die Steuereinheit dazu konfiguriert ist, zu identifizieren, ob eine Verbesserungsdatei des identifizierten Nicht-Echtzeit-3D-Dienstes heruntergeladen ist,
**gekennzeichnet dadurch, dass**
die Steuereinheit dazu konfiguriert ist, eine aktuelle Vorführungszeitstempel-Information, PTS-Information, der Basisansicht-Komponente zu beziehen und eine Anfangs-PTS- und Zeitskala-Information der Zusatzansicht-Komponente zu beziehen, und eine Kompositionszeit, CT, zur Synchronisierung zu berechnen, wobei die Steuereinheit dazu konfiguriert ist, 3D-Inhalte durch die Ausführung eines Synchronisierungsprozesses auf der Grundlage der berechneten CT zu rendern,
wobei die Kompositionszeit auf der Grundlage der Zeitskala-Information und der Differenz zwischen der aktuellen PTS-Information und der Anfangs-PTS-Information der Basisansicht-Komponente berechnet wird.

5. 3D-Dienst-Verarbeitungsvorrichtung nach Anspruch 4, wobei die Steuereinheit dazu konfiguriert ist, das Entnehmen der Zeitskala-Information über die Verbesserungsdatei auf der Grundlage der entnommenen Bezugsinformationen über die Verbesserungsdatei zu steuern.

**Revendications**

1. Procédé de traitement d'un service 3D, comprenant les étapes suivantes :

   la réception d'un premier signal via un canal de radiodiffusion, le premier signal portant une composante de vue de base pour le service 3D, la composante de vue de base étant multiplexée avec des informations de signalisation d'une section privée, dans lequel la section privée inclut un descripteur incluant des informations pour accéder à une composante de vue supplémentaire à apparier à la composante de vue de base ;
   le décodage d'une table d'informations d'événement à partir des informations de signalisation ;
   le fait d'identifier si un événement dans la table d'informations d'événement décodée correspond à un service 3D qui n'est pas en temps réel ;
   le fait d'identifier si un fichier d'amélioration du service 3D qui n'est pas en temps réel identifié est téléchargé ;
   la réception d'un second signal via Internet, le second signal portant la composante de vue supplémentaire pour le service 3D ;
   **caractérisé par**
   l'obtention d'une information d'estampille temporelle de présentation, PTS, actuelle de la composante de vue de base ;
   l'obtention d'une information d'échelle de temps et de PTS de démarrage de la composante de vue supplémentaire à partir de la table d'informations d'événement décodée,
   le calcul d'un temps de composition (CT) pour une synchronisation, dans lequel le temps de composition est calculé d'après les informations d'échelle de temps et une différence entre les informations PTS actuelles et les informations PTS de démarrage de la composante de vue de base ; et
   le rendu de contenu 3D de manière à réaliser un processus de synchronisation d'après le CT calculé.

2. Procédé selon la revendication 1, dans lequel le fichier d'amélioration correspond à l'un d'un flux de transport (TS) MPEG-2 et d'un format de fichier ISO.

3. Procédé selon la revendication 1, dans lequel un échantillon de synchronisation est découvert d'après une valeur du CT calculé,
   dans lequel un fragment d'échantillon est découvert d'après l'échantillon de synchronisation découvert et dans lequel une position d'un flux élémentaire pour la composante de vue supplémentaire est obtenue d'après le fragment d'échantillon découvert.

4. Dispositif de traitement de service 3D, comprenant :

   une première partie de réception (212) configurée pour recevoir un premier signal via un canal de radiodiffusion, le premier signal portant une composante de vue de base pour le service 3D, la composante de vue de base étant multiplexée avec des informations de signalisation d'une section privée,

dans lequel la section privée inclut un descripteur incluant des informations pour accéder à une composante de vue supplémentaire à apparier à la composante de vue de base ;

un décodeur d'informations de signalisation (220) configuré pour extraire une table d'informations d'événement des informations de signalisation et décoder la table d'informations d'événement ;

une seconde partie de réception (232) configurée pour recevoir un second signal via Internet, le second signal portant la composante de vue supplémentaire pour le service 3D,

un dispositif de commande configuré pour identifier si l'événement dans la table d'informations d'événement décodée correspond à un service 3D qui n'est pas en temps réel,

le dispositif de commande étant configuré pour identifier si un fichier d'amélioration du service 3D qui n'est pas en temps réel identifié est téléchargé,

**caractérisé en ce que**

le dispositif de commande est configuré pour obtenir une information d'estampille temporelle de présentation, PTS, actuelle de la composante de vue de base, et obtenir une information PTS de démarrage et d'échelle de temps de la composante de vue supplémentaire, et calculer un temps de composition, CT, pour une synchronisation, le dispositif de commande étant configuré pour rendre un contenu 3D de manière à réaliser un processus de synchronisation d'après le CT calculé,

dans lequel le temps de composition est calculé d'après les informations d'échelle de temps et une différence entre des informations PTS actuelles et des informations PTS de démarrage de la composante de vue de base.

5. Dispositif de traitement de service 3D selon la revendication 4, dans lequel le dispositif de commande est configuré pour commander les informations d'échelle de temps sur le fichier d'amélioration à extraire d'après les informations d'acquisition extraites sur le fichier d'amélioration.

FIG. 1

# FIG. 2

200

EP 2 822 282 B1

# FIG. 3

| Syntax | No. of bits | Mnemonic |
|---|---|---|
| TS_program_map_section ( ) { | | |
| table_id | 8 | uimsbf |
| section_syntax_indicator | 1 | bslbf |
| '0' | 1 | bslbf |
| reserved | 2 | bslbf |
| section_length | 12 | uimsbf |
| program_number | 16 | uimsbf |
| reserved | 2 | bslbf |
| version_number | 5 | uimsbf |
| current_next_indicator | 1 | bslbf |
| section_number | 8 | uimsbf |
| last_section_number | 8 | uimsbf |
| reserved | 3 | bslbf |
| PCR_PID | 13 | uimsbf |
| reserved | 4 | bslbf |
| program_info_length | 12 | uimsbf |
| for (i=0; i<N; i++) { | | |
| descriptor( ) | | |
| } | | |
| for (i=0; i<N1; i++) { | | |
| stream_type | 8 | uimsbf |
| reserved | 3 | bslbf |
| elementary_PID | 13 | uimsbf |
| reserved | 4 | bslbf |
| ES_info_length | 12 | uimsbf |
| for (i=0; i<N2; i++) { | | |
| descriptor() | | |
| } | | |
| } | | |
| CRC_32 | 32 | rpchof |
| } | | |

## FIG. 4

| Syntax | No. of bits | Format |
|---|---|---|
| program_enhancement_descriptor ( ) { | | |
| descriptor_tag | 8 | 0xTBD |
| descriptor_length | 8 | uimsbf |
| combined_service_type | 4 | uimsbf |
| enhancement_type | 3 | uimsbf |
| reserved | 3 | '111' |
| enhancement_right_flag | 1 | bslbf |
| sync_type | 4 | uimsbf |
| enhancement_stream_format | 8 | uimsbf |
| enhancement_stream_sampling_factor | 8 | uimsbf |
| if (enhancement_type= =0x1 \|\| enhancement_type= =0x2) { | | |
| linked_TSID | 16 | uimsbf |
| linked_program_number | 16 | uimsbf |
| reserved | 3 | '111' |
| linked_elementary_PID | 13 | uimsbf |
| } | | |
| else if (enhancement_type= =0x3) { | | |
| internet_linkage_information ( ) | | |
| } | | |
| if (enhancement_stream_format= =0x25 \|\| enhancement_stream_format= =0x26) { | | |
| disparity_near | 16 | tcimsbf |
| disparity_far | 16 | tcimsbf |
| } | | |
| } | | |

# FIG. 5

| Syntax | No. of bits | Format |
|---|---|---|
| terrestrial_virtual_channel_table_section ( ) { | | |
|    table_id | 8 | 0xC8 |
|    section_syntax_indicator | 1 | '1' |
|    private_indicator | 1 | '1' |
|    reserved | 2 | '11' |
|    section_length | 12 | uimsbf |
|    transport_stream_id | 16 | uimsbf |
|    reserved | 2 | '11' |
|    version_number | 5 | uimsbf |
|    current_next_indicator | 1 | bslbf |
|    section_number | 8 | uimsbf |
|    last_section_number | 8 | uimsbf |
|    protocol_version | 8 | uimsbf |
|    num_chnnels_in_section | 8 | uimsbf |
|    for (i=0; i<num_channels_in_section; i++) { | | |
|       short_name | 7*16 | uimsbf |
|       reserved | 4 | '1111' |
|       major_channel_number | 10 | uimsbf |
|       minor_channel_number | 10 | uimsbf |
|       modulation_mode | 8 | uimsbf |
|       carrier_frequnecy | 32 | uimsbf |
|       channel_TSID | 16 | uimsbf |
|       program_number | 16 | uimsbf |
|       ETM_location | 2 | uimsbf |
|       access_controlled | 1 | bslbf |
|       hidden | 1 | bslbf |
|       reserved | 2 | '11' |
|       hide_guide | 1 | bslbf |
|       reserved | 3 | '111' |
|       service_type | 6 | uimsbf |
|       source_id | 16 | uimsbf |
|       reserved | 6 | '111111' |
|       descriptors_length | 10 | uimsbf |
|       for (i=0; i<N; i++) { | | |
|          descriptor( ) | | |
|       } | | |
|    } | | |
|    reserved | 6 | '111111' |
|    additional_descriptors_length | 10 | uimsbf |
|    for (j=0; i<N; j++) { | | |
|       additional_descriptor( ) | | |
|    } | | |
|    CRC_32 | 32 | rpchof |
| } | | |

# FIG. 6

| Syntax | No. of bits | Format |
|---|---|---|
| channel_enhancement_descriptor ( ) { | | |
| descriptor_tag | 8 | 0xTBD |
| descriptor_length | 8 | uimsbf |
| combined_service_type | 4 | uimsbf |
| enhancement_type | 4 | uimsbf |
| reserved | 3 | '111' |
| enhancement_right_flag | 1 | bslbf |
| sync_type | 4 | uimsbf |
| enhancement_stream_format | 8 | uimsbf |
| enhancement_stream_sampling_factor | 8 | uimsbf |
| if (enhancement_type= =0x1 \|\| enhancement_type= =0x2) { | | |
| linked_TSID | 16 | uimsbf |
| linked_program_number | 16 | uimsbf |
| reserved | 4 | '1111' |
| linked_major_channel_number | 10 | uimsbf |
| linked_minor_channel_number | 10 | uimsbf |
| linked_source_id | 16 | uimsbf |
| reserved | 3 | '111' |
| linked_elementary_PID | 13 | uimsbf |
| } | | |
| else if (enhancement_type= =0x3) { | | |
| internet_linkage_information ( ) | | |
| } | | |
| if (enhancement_stream_format= =0x25 \|\| enhancement_stream_format= =0x26) { | | |
| disparity_near | 16 | tcimsbf |
| disparity_far | 16 | tcimsbf |
| } | | |
| } | | |

## FIG. 7

| Syntax | No. of bits | Identifier |
|---|---|---|
| service_description_section ( ) { | | |
| table_id | 8 | uimsbf |
| section_syntax_indicator | 1 | bslbf |
| reserved_future_use | 1 | bslbf |
| reserved | 2 | bslbf |
| section_length | 12 | uimsbf |
| transport_stream_id | 16 | uimsbf |
| reserved | 2 | bslbf |
| version_number | 5 | uimsbf |
| current_next_indicator | 1 | bslbf |
| section_number | 8 | uimsbf |
| last_section_number | 8 | uimsbf |
| original_network_id | 16 | uimsbf |
| reserved_future_use | 8 | bslbf |
| for  (i = 0; i < N; i++) { | | |
| service_id | 16 | uimsbf |
| reserved_future_use | 6 | bslbf |
| EIT_schedule_flag | 1 | bslbf |
| EIT_present_following_flag | 1 | bslbf |
| running_status | 3 | uimsbf |
| free_CA_mode | 1 | bslbf |
| descriptors_loop_length | 12 | uimsbf |
| for  (j = 0; i < N; j++) { | | |
| descriptor ( ) | | |
| } | | |
| } | | |
| CRC_32 | 32 | rpchof |
| } | | |

# FIG. 8

| Syntax | No. of bits | Format |
|---|---|---|
| service_enhancement_descriptor ( ) { | | |
| descriptor_tag | 8 | 0xTBD |
| descriptor_length | 8 | uimsbf |
| combined_service_type | 4 | uimsbf |
| enhancement_type | 3 | uimsbf |
| reserved | 3 | '111' |
| enhancement_right_flag | 1 | bslbf |
| sync_type | 4 | uimsbf |
| enhancement_stream_format | 8 | uimsbf |
| enhancement_stream_sampling_factor | 8 | uimsbf |
| if (enhancement_type= =0x1 \|\| enhancement_type= =0x2) { | | |
| linked_TSID | 16 | uimsbf |
| linked_original_network_id | 16 | uimsbf |
| linked_service_id | 16 | uimsbf |
| reserved | 3 | '111' |
| linked_elementary_PID | 13 | uimsbf |
| } | | |
| else if (enhancement_type= =0x3) { | | |
| internet_linkage_information ( ) | | |
| } | | |
| if (enhancement_stream_format= =0x25 \|\| | | |
| enhancement_stream_format= =0x26) { | | |
| disparity_near | 16 | tcimsbf |
| disparity_far | 16 | tcimsbf |
| } | | |
| } | | |

# FIG. 9

| Syntax | No. of bits | Format |
|---|---|---|
| event_information_table_section ( ) { | | |
|    table_id | 8 | 0xC8 |
|    section_syntax_indicator | 1 | '1' |
|    private_indicator | 1 | '1' |
|    reserved | 2 | '11' |
|    section_length | 12 | uimsbf |
|    source_id | 16 | uimsbf |
|    reserved | 2 | '11' |
|    version_number | 5 | uimsbf |
|    current_next_indicator | 1 | '1' |
|    section_number | 8 | uimsbf |
|    last_section_number | 8 | uimsbf |
|    protocol_version | 8 | uimsbf |
|    num_events_in_section | 8 | uimsbf |
|    for (j=0; j<num_events_in_section; j++) { | | |
|       reserved | 2 | '11' |
|       event_id | 14 | uimsbf |
|       start_time | 32 | uimsbf |
|       reserved | 2 | '11' |
|       ETM_location | 2 | uimsbf |
|       length_in_seconds | 20 | uimsbf |
|       title_length | 8 | uimsbf |
|       title_text ( ) | var | |
|       reserved | 4 | '1111' |
|       descriptors_length | 12 | |
|    for (i = 0; i < N; i++) { | | |
|       descriptor( ) | | |
|       } | | |
|    } | | |
|    CRC_32 | 32 | rpchof |
| } | | |

# FIG. 10

| Syntax | No. of bits | Identifier |
|---|---|---|
| event_information_section ( ) { | | |
| table_id | 8 | uimsbf |
| section_syntax_indicator | 1 | bslbf |
| reserved_future_use | 1 | bslbf |
| reserved | 2 | bslbf |
| section_length | 12 | uimsbf |
| service_id | 16 | uimsbf |
| reserved | 2 | bslbf |
| version_number | 5 | uimsbf |
| current_next_indicator | 1 | bslbf |
| section_number | 8 | uimsbf |
| last_section_number | 8 | uimsbf |
| transport_stream_id | 16 | uimsbf |
| original_network_id | 16 | uimsbf |
| segment_last_section_number | 8 | uimsbf |
| last_table_id | 8 | uimsbf |
| for  (i = 0; i < N; i++) { | | |
| event_id | 16 | uimsbf |
| start_time | 40 | bslbf |
| duration | 24 | uimsbf |
| runinng_status | 3 | uimsbf |
| free_CA_mode | 1 | bslbf |
| descriptors_loop_length | 12 | uimsbf |
| for  (i = 0; i < N; i++) { | | |
| descriptor ( ) | | |
| } | | |
| } | | |
| CRC_32 | 32 | rpchof |
| } | | |

## FIG. 11

| Syntax | No. of bits | Format |
|---|---|---|
| event_enhancement_descriptor ( ) { | | |
| descriptor_tag | 8 | 0 xTBD |
| descriptor_length | 8 | uimsbf |
| combined_service_type | 4 | uimsbf |
| enhancement_type | 4 | uimsbf |
| reserved | 3 | 111 |
| enhancement_right_flag | 1 | bslbf |
| sync_type = 0 x 2 (Non-real time) | 4 | uimsbf |
| enhancement_stream_format | 8 | uimsbf |
| enhancement_stream_sampling_factor | 8 | uimsbf |
| if (sync_type != 0 x 0) { | | |
| avail_time_start | 32 | uimsbf |
| } | | |
| if (enhancement_type == 0 x 1 or 2) { | | |
| linked_TSID | 16 | uimsbf |
| linked_program_number | 16 | uimsbf |
| reserved | 3 | 111 |
| linked_elementary_PID | 13 | uimsbf |
| } | | |
| else if (event_enhancement_type == 0 x 3) { | | |
| internet_linkage_information ( ) | | |
| } | | |
| if (enhancement_stream_format == 0 x 25 \|\| enhancement_stream_format == 0 x 26) { | | |
| disparity_near | 16 | tcimsbf |
| disparity_far | 16 | tcimsbf |
| } | | |
| if (sync_type == 0 x 2) { | | |
| available_start_time_UTC | 32 | uimsbf |
| available_end_time_UTC | 32 | uimsbf |
| download_protocol | 8 | uimsbf |
| download_format | 7 | uimsbf |
| start_point_PTS | 33 | bslbf |
| } | | |
| } | | |

# FIG. 12

| Field | Meaning |
|-------|---------|
| 0x0 | Scalable video service (2D) |
| 0x1 | 3D stereoscopic service |
| 0x2 | 3D multiview service |
| 0x3 | UD video service |
| 0x4 ~ | Reserved |

(a)

| Field | Meaning |
|-------|---------|
| 0x0 | This event contains all necessary components of a service (This indicates that enhancement data is also received in a manner of being included as a component of the corresponding event). |
| 0x1 | Enhancement data is received on a channel different from a channel of a corresponding event and a type of a reception path is identical to a type of a reception path of the corresponding event. (For instance, if an event corresponds to a terrestrial, enhancement data for the event is received on a different channel of the terrestrial.) Detail path information on the enhancement data uses the linked_TSID and the linked_program_number. |
| 0x2 | A corresponding event includes enhancement data only and an essential data is transmitted on a path of an identical type. In particular, both the enhancement data and the essential data are received on terrestrial. In the same manner, Detail path information on the essential data uses the linked_TSID and the linked_program_number. |
| 0x3 | Enhancement data for a corresponding event is received on the internet. Path information for accessing the enhancement data uses the internet_linkage_information. |
| 0x4 ~ | Reserved |

(b)

EP 2 822 282 B1

# FIG. 13

| Field | Meaning |
|---|---|
| 0x0 | Components of the corresponding event and enhancement data are transmitted at the same time. (synchronized transmission) |
| 0x1 | Enhancement data is transmitted after corresponding event. (In order to watch a normal 3D video, the corresponding event is recorded in advance, and it is required to interlock or combine a lately received enhancement data with the recorded corresponding event.) |
| 0x2 | Enhancement data is transmitted prior to corresponding data. In order to watch a normal 3D video, it is required to interlock or combine components of the event received in real time with the previously received/stored enhancement data. |
| 0x3 | Although it is identical to the case of 0×1, it indicates that synchronized transmission of the enhancement data is also possible. |
| 0x4 ~ | Although it is identical to the case of 0×2, it indicates that synchronized transmission of the enhancement data is also possible. |

(a)

| Field | Meaning |
|---|---|
| 0x02 | MPEG-2 video stream |
| 0x1B | AVC/H.264 video stream |
| 0x1F | SVC video sub-bitstream |
| 0x20 | MVC video sub-bitstream |
| 0x23 | Additional video stream coded by MPEG-2 video |
| 0x24 | Additional video stream coded by AVC/H.264 video |
| 0x25 | Depth (disparity) map coded by MPEG-2 video |
| 0x26 | Depth (disparity) map coded by AVC/H.264 video |
| Others | Unspecified or reserved |

(b)

| Field | Meaning |
|---|---|
| 0x00 | Resolution identical to standard video |
| 0xXY | Width is 1/(X+1) in comparison with standard video, height is 1/(Y+1) in comparison with standard video |

(c)

# FIG. 14

| Syntax | No. of bits | Format | | |
|---|---|---|---|---|
| event_enhancement_descriptor ( ) { | | | | |
| ... | | | | |
| enhancement_type = 0 x1 or 2 (same media) | | | | |
| ... | | | | |
| sync_type = 0x2 (Non-real time) | | | | |
| ... | | | | |
| if (sync_type == 0x2) { | | | | |
| available_start_time_UTC | 32 | uimsbf | | |
| available_end_time_UTC | 32 | uimsbf | | |
| download_protocol | 8 | uimsbf | | |
| download_format | 7 | uimsbf | | |
| start_point_PTS | 33 | bslbf | | |
| if (download_protocol == 0x03) { → NRT | | | | |
| major_channel_number | 10 | uimsbf | ⎫ | |
| minor_channel_number | 10 | uimsbf | ⎬ A: channel-related information | |
| source_id | 16 | uimsbf | | |
| channel_TSID | 16 | uimsbf | | |
| program_number | 16 | uimsbf | ⎭ | |
| service_id | 16 | uimsbf | ⎱ B: NRT-related information | |
| content_linkage | 32 | uimsbf | ⎰ | |
| } | | | | |
| } | | | | |
| } | | | | |

## FIG. 15

```
         ┌─────────────┐
         │    start    │
         └─────────────┘
                │
                ▼
  ┌────────────────────────────────────────┐
  │ identify information on virtual channel on which NRT │ ── S102
  │   content is transmitted and program number          │
  └────────────────────────────────────────┘
                │
                ▼
  ┌────────────────────────────────────────┐
  │   parse PMT for corresponding program number         │ ── S104
  └────────────────────────────────────────┘
                │
                ▼
  ┌────────────────────────────────────────┐
  │ identify PID value for DSM-CC addressable section stream │ ── S106
  │ including NRT service to which NRT content is transmitted │
  └────────────────────────────────────────┘
                │
                ▼
  ┌────────────────────────────────────────┐
  │ process IP/UDP packet(s) including NRT service signaling │ ── S108
  │ channel by decoding stream including identified PID value │
  └────────────────────────────────────────┘
                │
                ▼
  ┌────────────────────────────────────────┐
  │   identify corresponding content schedule and access │ ── S110
  │     information using NRT-IT, SMT and the like        │
  └────────────────────────────────────────┘
                │
                ▼
  ┌────────────────────────────────────────┐
  │        download corresponding NRT content            │ ── S112
  └────────────────────────────────────────┘
                │
                ▼
         ┌─────────────┐
         │     end     │
         └─────────────┘
```

FIG. 16

# FIG. 17

```
                        ( start )
                            │
                            ▼                          S202
        ┌──────────────────────────────────────────────┐
        │  obtain Start PTS information from signaling information  │
        └──────────────────────────────────────────────┘
                            │
                            ▼                          S204
        ┌──────────────────────────────────────────────┐
        │   obtain current PTS information from PES for standard    │
        │                video based on PMT                        │
        └──────────────────────────────────────────────┘
                            │
                            ▼                          S206
        ┌──────────────────────────────────────────────┐
        │  obtain time scale information from file for additional   │
        │              video stream based on EIT                   │
        └──────────────────────────────────────────────┘
                            │
                            ▼                          S208
        ┌──────────────────────────────────────────────┐
        │   calculate random access point, i.e., CT, based         │
        │        on obtained Start PTS information, current        │
        │      PTS information and time scale information           │
        └──────────────────────────────────────────────┘
                            │
                            ▼                          S210
        ┌──────────────────────────────────────────────┐
        │   search for sync sample from calculated sample CT       │
        └──────────────────────────────────────────────┘
                            │
                            ▼                          S212
        ┌──────────────────────────────────────────────┐
        │  obtain ES location for elementary stream (ES) of        │
        │          additional video from sample chunk             │
        └──────────────────────────────────────────────┘
```

```
                                                       S214
        ┌──────────────────────────────────────────────┐
        │           obtain sample for additional                  │
        │       video based on obtained ES location               │
        └──────────────────────────────────────────────┘
                            │
                            ▼                          S216
        ┌──────────────────────────────────────────────┐
        │ synchronize video standard stream (main)                │
        │  for standard video with video standard                 │
        │    stream (sub) for additional video                    │
        └──────────────────────────────────────────────┘
                            │
                            ▼
                        ( end )
```

# FIG. 18

```
         ( Watch TV )
               │
               │      S302
               ▼
      ┌─────────────────┐
      │  Download EIT   │
      │   & Decode      │
      └─────────────────┘
               │      S304
               ▼
         ╱─────────────╲
No  ◄───  event_enhance-
         ment_desc. exist?
         ╲─────────────╱
               │ Yes
               │      S306
               ▼
         ╱─────────────╲
No  ◄───  Want to watch 3D
              event?
         ╲─────────────╱
               │ Yes    S308
               ▼
      ┌─────────────────┐
      │  Decode event   │
      │enhancement desciprtor│
      └─────────────────┘
               │
               │      S310
               ▼
         ╱─────────────╲        Non-real-time
         realtime or non-  ─────────────────────┐
         real-time 3D?                          │
         ╲─────────────╱                        │
    Real-time │         S312                    │      S316
               ▼                                 ▼
      ┌─────────────────┐              ╱─────────────╲
      │ Start 3D        │              Already            No
      │ streaming       │         downloaded enhancement ──────┐
      └─────────────────┘              file?                   │
               │                  ╲─────────────╱              │
               ▼       MPEG-2         │ Yes                    │
S314─ ┌─────────────────┐ TS          │      S324              │
      │ Synchronize based on│◄──── ╱─────────────╲             │
      │  PTS of MPEG-2 TS   │      File Format?                │
      └─────────────────┘      ╲─────────────╱                 │
               │          S326 │          │ ISO File           │
               ▼               │          │ (e.g. mp4)         │
S330─ ( Watch 3D contents )    ▼                                
                     ┌─────────────────┐       S318           
                     │ Calculate CT and find│ ╱─────────────╲  
                     │corresponding sample  │  Currently      No
                     │    location     │    available?  ─────┐
                     └─────────────────┘  ╲─────────────╱     │
                               │         S322 │ Yes    S320   │
                               ▼              ▼               ▼
                     ┌─────────────────┐ ┌──────────┐ ┌──────────────┐
                     │Synchronize based on│ │Download  │ │Reserve & wait│
                     │PTS of Live stream &│ │enhancement│ │ downloading  │
                     │CT of ISO type File │ │  file    │ └──────────────┘
                     │   (e.g. mp4)    │─S328 └──────────┘
                     └─────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009268806 A1